(19) **Europäisches Patentamt**
**European Patent Office**
**Office européen des brevets**

(11) **EP 4 496 315 A1**

(12) **EUROPEAN PATENT APPLICATION**
published in accordance with Art. 153(4) EPC

(43) Date of publication:
**22.01.2025 Bulletin 2025/04**

(21) Application number: **23775260.5**

(22) Date of filing: **21.03.2023**

(51) International Patent Classification (IPC):
$H04N\ 19/57^{(2014.01)}$   $H04N\ 19/70^{(2014.01)}$
$H04N\ 19/54^{(2014.01)}$   $H04N\ 19/119^{(2014.01)}$
$H04N\ 19/597^{(2014.01)}$   $G01S\ 17/89^{(2020.01)}$

(52) Cooperative Patent Classification (CPC):
G01S 17/89; H04N 19/119; H04N 19/54;
H04N 19/57; H04N 19/597; H04N 19/70

(86) International application number:
**PCT/KR2023/003710**

(87) International publication number:
**WO 2023/182764 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.03.2022 KR 20220034484**

(71) Applicant: **LG Electronics Inc.**
**Yeongdeungpo-gu**
**Seoul 07336 (KR)**

(72) Inventor: **HUR, Hyejung**
**Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **POINT CLOUD DATA TRANSMISSION DEVICE, POINT CLOUD DATA TRANSMISSION METHOD, POINT CLOUD DATA RECEPTION DEVICE, AND POINT CLOUD DATA RECEPTION METHOD**

(57)    A point cloud data transmission method according to embodiments may comprise the steps of encoding point cloud data; and transmitting a bitstream comprising the point cloud data. In addition, a point cloud data transmission device according to embodiments may comprise: an encoder which encodes point cloud data; and a transmitter which transmits a bitstream comprising the point cloud data.

FIG. 1

**Description**

[Technical Field]

Embodiments relate to a method and device for processing point cloud content.

[Background Art]

Point cloud content is content represented by a point cloud, which is a set of points belonging to a coordinate system representing a three-dimensional space. The point cloud content may express media configured in three dimensions, and is used to provide various services such as virtual reality (VR), augmented reality (AR), mixed reality (MR), and self-driving services. However, tens of thousands to hundreds of thousands of point data are required to represent point cloud content. Therefore, there is a need for a method for efficiently processing a large amount of point data.

[Disclosure]

[Technical Problem]

Embodiments provide a device and method for efficiently processing point cloud data. Embodiments provide a point cloud data processing method and device for addressing latency and encoding/decoding complexity.
The technical scope of the embodiments is not limited to the aforementioned technical objects, and may be extended to other technical objects that may be inferred by those skilled in the art based on the entire contents disclosed herein.

[Technical Solution]

In one aspect of the present disclosure, provided herein is a point cloud data transmission device, a point cloud data transmission method, a point cloud data reception device, and a point cloud data reception method for efficiently transmitting and receiving a point cloud.
In another aspect of the present disclosure, provided herein is a point cloud data transmission device, a point cloud data transmission method, a point cloud data reception device, and a point cloud data reception method for addressing latency and encoding/decoding complexity.
Embodiments are not limited to the above-described objects, and the scope of the embodiments may be extended to other objects that can be inferred by those skilled in the art based on the entire contents of the present disclosure.

[Advantageous Effects]

Devices and methods according to embodiments may process point cloud data with high efficiency.
The devices and methods according to the embodiments may provide a high-quality point cloud service.
The devices and methods according to the embodiments may provide point cloud content for providing general-purpose services such as a VR service and a self-driving service.

[Description of Drawings]

The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts.

FIG. 1 shows an exemplary point cloud content providing system according to embodiments;
FIG. 2 is a block diagram illustrating a point cloud content providing operation according to embodiments;
FIG. 3 illustrates an exemplary point cloud encoder according to embodiments;
FIG. 4 shows an example of an octree and occupancy code according to embodiments;
FIG. 5 illustrates an example of point configuration in each LOD according to embodiments;
FIG. 6 illustrates an example of point configuration in each LOD according to embodiments;

FIG. 7 illustrates a point cloud decoder according to embodiments;

FIG. 8 illustrates a transmission device according to embodiments;

FIG. 9 illustrates a reception device according to embodiments;

FIG. 10 illustrates an exemplary structure operable in connection with point cloud data transmission/reception methods/devices according to embodiments;

FIG. 11 illustrates point cloud data captured by LiDAR;

FIG. 12 illustrates point cloud data about a road according to embodiments;

FIG. 13 illustrates point cloud data about a road according to embodiments;

FIG. 14 illustrates point cloud data about a road according to embodiments;

FIG. 15 illustrates point cloud data about a road captured by LiDAR;

FIG. 16 illustrates grouping of point cloud data having similar radii;

FIG. 17 illustrates an example of setting a window for motion search in point cloud data according to embodiments;

FIG. 18 illustrates an example of setting a window for motion search in point cloud data according to embodiments;

FIG. 19 illustrates an example of setting a window for motion search in point cloud data according to embodiments;

FIG. 20 illustrates a point cloud data transmission device/method according to embodiments;

FIG. 21 illustrates a point cloud data reception device/method according to embodiments;

FIG. 22 illustrates a structure of a bitstream according to embodiments;

FIG. 23 illustrates a syntax of a geometry parameter set according to embodiments;

FIG. 24 illustrates a syntax of a tile parameter set according to embodiments;

FIG. 25 illustrates a syntax of a geometry data header according to embodiments;

FIG. 26 illustrates a syntax of a geometry PU header according to embodiments;

FIG. 27 illustrates a point cloud data transmission method according to embodiments; and

FIG. 28 illustrates a point cloud data reception method according to embodiments.

[Best Mode]

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that may be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

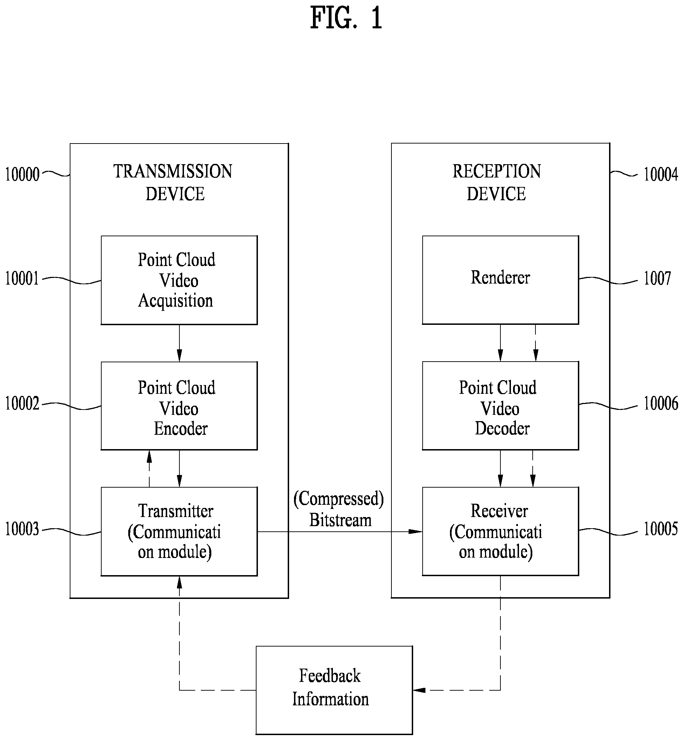

FIG. 1 shows an exemplary point cloud content providing system according to embodiments.

The point cloud content providing system illustrated in FIG. 1 may include a transmission device 10000 and a reception device 10004. The transmission device 10000 and the reception device 10004 are capable of wired or wireless communication to transmit and receive point cloud data.

The point cloud data transmission device 10000 according to the embodiments may secure and process point cloud video (or point cloud content) and transmit the same. According to embodiments, the transmission device 10000 may include a fixed station, a base transceiver system (BTS), a network, an artificial intelligence (AI) device and/or system, a robot, an AR/VR/XR device and/or server. According to embodiments, the transmission device 10000 may include a device, a robot, a vehicle, an AR/VR/XR device, a portable device, a home appliance, an Internet of Thing (IoT) device, and an AI device/server which are configured to perform communication with a base station and/or other wireless devices using a radio access technology (e.g., 5G New RAT (NR), Long Term Evolution (LTE)).

The transmission device 10000 according to the embodiments includes a point cloud video acquirer 10001, a point cloud video encoder 10002, and/or a transmitter (or communication module) 10003.

The point cloud video acquirer 10001 according to the embodiments acquires a point cloud video through a processing process such as capture, synthesis, or generation. The point cloud video is point cloud content represented by a point cloud, which is a set of points positioned in a 3D space, and may be referred to as point cloud video data, point cloud data, or the like. The point cloud video according to the embodiments may include one or more frames. One frame represents a still image/picture. Therefore, the point cloud video may include a point cloud image/frame/picture, and may be referred to as a point cloud image, frame, or picture.

The point cloud video encoder 10002 according to the embodiments encodes the acquired point cloud video data. The point cloud video encoder 10002 may encode the point cloud video data based on point cloud compression coding. The point cloud compression coding according to the embodiments may include geometry-based point cloud compression (G-PCC) coding and/or video-based point cloud compression (V-PCC) coding or next-generation coding. The point cloud compression coding according to the embodiments is not limited to the above-described embodiment. The point cloud video encoder 10002 may output a bitstream containing the encoded point cloud video data. The bitstream may contain not only the encoded point cloud video data, but also signaling information related to encoding of the point cloud video data.

The transmitter 10003 according to the embodiments transmits the bitstream containing the encoded point cloud video data. The bitstream according to the embodiments is encapsulated in a file or segment (e.g., a streaming segment), and is transmitted over various networks such as a broadcasting network and/or a broadband network. Although not shown in the figure, the transmission device 10000 may include an encapsulator (or an encapsulation module) configured to perform an encapsulation operation. According to embodiments, the encapsulator may be included in the transmitter 10003. According to embodiments, the file or segment may be transmitted to the reception device 10004 over a network, or stored in a digital storage medium (e.g., USB, SD, CD, DVD, Blu-ray, HDD, SSD, etc.). The transmitter 10003 according to the embodiments is capable of wired/wireless communication with the reception device 10004 (or the receiver 10005) over a network of 4G, 5G, 6G, etc. In addition, the transmitter may perform a necessary data processing operation according to the network system (e.g., a 4G, 5G or 6G communication network system). The transmission device 10000 may transmit the encapsulated data in an on-demand manner.

The reception device 10004 according to the embodiments includes a receiver 10005, a point cloud video decoder 10006, and/or a renderer 10007. According to embodiments, the reception device 10004 may include a device, a robot, a vehicle, an AR/VR/XR device, a portable device, a home appliance, an Internet of Things (IoT) device, and an AI device/server which are configured to perform communication with a base station and/or other wireless devices using a radio access technology (e.g., 5G New RAT (NR), Long Term Evolution (LTE)).

The receiver 10005 according to the embodiments receives the bitstream containing the point cloud video data or the file/segment in which the bitstream is encapsulated from the network or storage medium. The receiver 10005 may perform necessary data processing according to the network system (e.g., a communication network system of 4G, 5G, 6G, etc.). The receiver 10005 according to the embodiments may decapsulate the received file/segment and output a bitstream. According to embodiments, the receiver 10005 may include a decapsulator (or a decapsulation module) configured to perform a decapsulation operation. The decapsulator may be implemented as an element (or component) separate from the receiver 10005.

The point cloud video decoder 10006 decodes the bitstream containing the point cloud video data. The point cloud video decoder 10006 may decode the point cloud video data according to the method by which the point cloud video data is encoded (e.g., in a reverse process of the operation of the point cloud video encoder 10002). Accordingly, the point cloud video decoder 10006 may decode the point cloud video data by performing point cloud decompression coding, which is the reverse process to the point cloud compression. The point cloud decompression coding includes G-PCC coding.

The renderer 10007 renders the decoded point cloud video data. The renderer 10007 may output point cloud content by rendering not only the point cloud video data but also audio data. According to embodiments, the renderer 10007 may include a display configured to display the point cloud content. According to embodiments, the display may be implemented as a separate device or component rather than being included in the renderer 10007.

The arrows indicated by dotted lines in the drawing represent a transmission path of feedback information acquired by the reception device 10004. The feedback information is information for reflecting interactivity with a user who consumes the point cloud content, and includes information about the user (e.g., head orientation information, viewport information, and the like). In particular, when the point cloud content is content for a service (e.g., self-driving service, etc.) that requires interaction with the user, the feedback information may be provided to the content transmitting side (e.g., the transmission device 10000) and/or the service provider. According to embodiments, the feedback information may be used in the reception device 10004 as well as the transmission device 10000, or may not be provided.

The head orientation information according to embodiments is information about the user's head position, orientation, angle, motion, and the like. The reception device 10004 according to the embodiments may calculate the viewport information based on the head orientation information. The viewport information may be information about a region of a point cloud video that the user is viewing. A viewpoint is a point through which the user is viewing the point cloud video, and may refer to a center point of the viewport region. That is, the viewport is a region centered on the viewpoint, and the size and shape of the region may be determined by a field of view (FOV). Accordingly, the reception device 10004 may extract the viewport information based on a vertical or horizontal FOV supported by the device in addition to the head orientation information. Also, the reception device 10004 performs gaze analysis or the like to check the way the user consumes a point cloud, a region that the user gazes at in the point cloud video, a gaze time, and the like. According to embodiments, the reception device 10004 may transmit feedback information including the result of the gaze analysis to the transmission device 10000. The feedback information according to the embodiments may be acquired in the rendering and/or display process. The feedback information according to the embodiments may be secured by one or more sensors included in the reception device 10004. According to embodiments, the feedback information may be secured by the renderer 10007 or a separate external element (or device, component, or the like). The dotted lines in FIG. 1 represent a process of transmitting the feedback information secured by the renderer 10007. The point cloud content providing system may process (encode/decode) point cloud data based on the feedback information. Accordingly, the point cloud video data decoder 10006 may perform a decoding operation based on the feedback information. The reception device 10004 may transmit the feedback information to the transmission device 10000. The transmission device 10000 (or the point cloud video data encoder 10002) may perform an encoding operation based on the feedback information. Accordingly, the point cloud content providing system may efficiently process necessary data (e.g., point cloud data corresponding to the user's head position) based on the feedback information rather than processing (encoding/decoding) the entire point cloud data, and provide point cloud content to the user.

According to embodiments, the transmission device 10000 may be called an encoder, a transmission device, a transmitter, or the like, and the reception device 10004 may be called a decoder, a receiving device, a receiver, or the like.

The point cloud data processed in the point cloud content providing system of FIG. 1 according to embodiments (through a series of processes of acquisition/encoding/transmission/decoding/rendering) may be referred to as point cloud content data or point cloud video data. According to embodiments, the point cloud content data may be used as a concept covering metadata or signaling information related to the point cloud data.

The elements of the point cloud content providing system illustrated in FIG. 1 may be implemented by hardware, software, a processor, and/or a combination thereof.

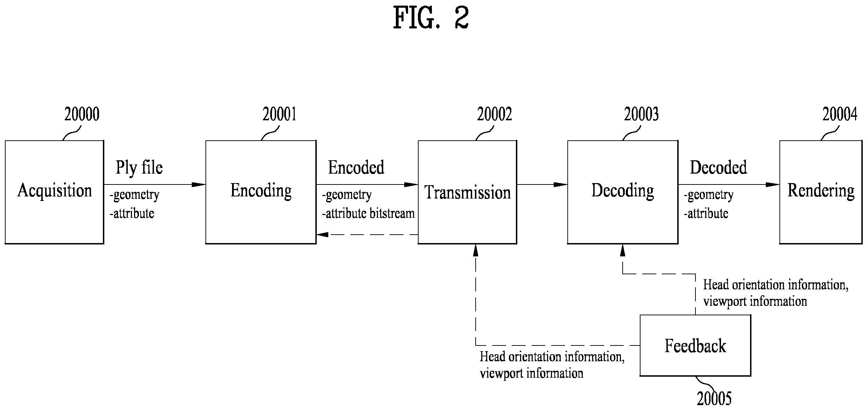

FIG. 2 is a block diagram illustrating a point cloud content providing operation according to embodiments.

The block diagram of FIG. 2 shows the operation of the point cloud content providing system described in FIG. 1. As described above, the point cloud content providing system may process point cloud data based on point cloud compression coding (e.g., G-PCC).

The point cloud content providing system according to the embodiments (e.g., the point cloud transmission device 10000 or the point cloud video acquirer 10001) may acquire a point cloud video (20000). The point cloud video is represented by a point cloud belonging to a coordinate system for expressing a 3D space. The point cloud video according to the embodiments may include a Ply (Polygon File format or the Stanford Triangle format) file. When the point cloud video has one or more frames, the acquired point cloud video may include one or more Ply files. The Ply files contain point cloud data, such as point geometry and/or attributes. The geometry includes positions of points. The position of each point may be represented by parameters (e.g., values of the X, Y, and Z axes) representing a three-dimensional coordinate system (e.g., a coordinate system composed of X, Y and Z axes). The attributes include attributes of points (e.g., information about texture, color (in YCbCr or RGB), reflectance r, transparency, etc. of each point). A point has one or more attributes. For example, a point may have an attribute that is a color, or two attributes that are color and reflectance. According to embodiments, the geometry may be called positions, geometry information, geometry data, position information, position data, or the like, and the attribute may be called attributes, attribute information, attribute data, or the like. The point cloud content providing system (e.g., the point cloud transmission device 10000 or the point cloud video acquirer 10001) may secure point cloud data from information (e.g., depth information, color information, etc.) related to the acquisition process of the point cloud video.

The point cloud content providing system (e.g., the transmission device 10000 or the point cloud video encoder 10002) according to the embodiments may encode the point cloud data (20001). The point cloud content providing system may encode the point cloud data based on point cloud compression coding. As described above, the point cloud data may include the geometry information and attribute information about a point. Accordingly, the point cloud content providing system may perform geometry encoding of encoding the geometry and output a geometry bitstream. The point cloud content providing system may perform attribute encoding of encoding attributes and output an attribute bitstream. According to embodiments, the point cloud content providing system may perform the attribute encoding based on the geometry encoding. The geometry bitstream and the attribute bitstream according to the embodiments may be multiplexed and output as one bitstream. The bitstream according to the embodiments may further contain signaling information related to the geometry encoding and attribute encoding.

The point cloud content providing system (e.g., the transmission device 10000 or the transmitter 10003) according to the embodiments may transmit the encoded point cloud data (20002). As illustrated in FIG. 1, the encoded point cloud data may be represented by a geometry bitstream and an attribute bitstream. In addition, the encoded point cloud data may be transmitted in the form of a bitstream together with signaling information related to encoding of the point cloud data (e.g., signaling information related to the geometry encoding and the attribute encoding). The point cloud content providing system may encapsulate a bitstream that carries the encoded point cloud data and transmit the same in the form of a file or segment.

The point cloud content providing system (e.g., the reception device 10004 or the receiver 10005) according to the embodiments may receive the bitstream containing the encoded point cloud data. In addition, the point cloud content providing system (e.g., the reception device 10004 or the receiver 10005) may demultiplex the bitstream.

The point cloud content providing system (e.g., the reception device 10004 or the point cloud video decoder 10005) may decode the encoded point cloud data (e.g., the geometry bitstream, the attribute bitstream) transmitted in the bitstream. The point cloud content providing system (e.g., the reception device 10004 or the point cloud video decoder 10005) may decode the point cloud video data based on the signaling information related to encoding of the point cloud video data contained in the bitstream. The point cloud content providing system (e.g., the reception device 10004 or the point cloud video decoder 10005) may decode the geometry bitstream to reconstruct the positions (geometry) of points. The point cloud content providing system may reconstruct the attributes of the points by decoding the attribute bitstream based on the reconstructed geometry. The point cloud content providing system (e.g., the reception device 10004 or the point cloud video decoder 10005) may reconstruct the point cloud video based on the positions according to the reconstructed geometry and the decoded attributes.

The point cloud content providing system according to the embodiments (e.g., the reception device 10004 or the renderer 10007) may render the decoded point cloud data (20004). The point cloud content providing system (e.g., the reception device 10004 or the renderer 10007) may render the geometry and attributes decoded through the decoding process, using various rendering methods. Points in the point cloud content may be rendered to a vertex having a certain thickness, a cube having a specific minimum size centered on the corresponding vertex position, or a circle centered on the corresponding vertex position. All or part of the rendered point cloud content is provided to the user through a display (e.g., a VR/AR display, a general display, etc.).

The point cloud content providing system (e.g., the reception device 10004) according to the embodiments may secure feedback information (20005). The point cloud content providing system may encode and/or decode point cloud data based on the feedback information. The feedback information and the operation of the point cloud content providing system according to the embodiments are the same as the feedback information and the operation described with reference to FIG. 1, and thus detailed description thereof is omitted.

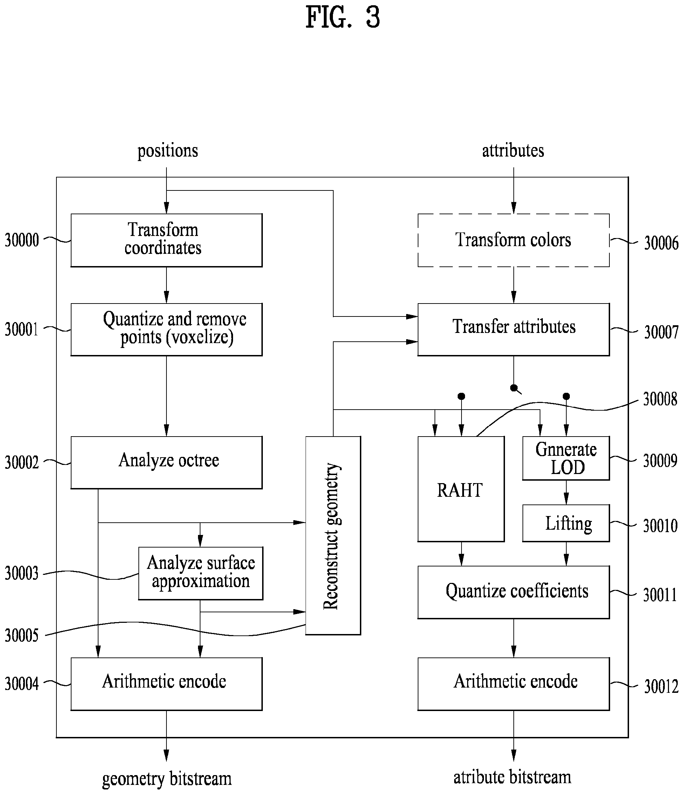

FIG. 3 illustrates an exemplary point cloud encoder according to embodiments.

FIG. 3 shows an example of the point cloud video encoder 10002 of FIG. 1. The point cloud encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described with reference to FIGS. 1 and 2, the point cloud encoder may perform geometry encoding and attribute encoding. The geometry encoding is performed before the attribute encoding.

The point cloud encoder according to the embodiments includes a coordinate transformer (Transform coordinates) 30000, a quantizer (Quantize and remove points (voxelize)) 30001, an octree analyzer (Analyze octree) 30002, and a surface approximation analyzer (Analyze surface approximation) 30003, an arithmetic encoder (Arithmetic encode) 30004, a geometry reconstructor (Reconstruct geometry) 30005, a color transformer (Transform colors) 30006, an attribute transformer (Transform attributes) 30007, a RAHT transformer (RAHT) 30008, an LOD generator (Generate LOD) 30009, a lifting transformer (Lifting) 30010, a coefficient quantizer (Quantize coefficients) 30011, and/or an arithmetic encoder (Arithmetic encode) 30012.

The coordinate transformer 30000, the quantizer 30001, the octree analyzer 30002, the surface approximation analyzer 30003, the arithmetic encoder 30004, and the geometry reconstructor 30005 may perform geometry encoding. The geometry encoding according to the embodiments may include octree geometry coding, predictive tree geometry coding, direct coding, trisoup geometry encoding, and entropy encoding. The direct coding and trisoup geometry encoding are applied selectively or in combination. The geometry encoding is not limited to the above-described example.

As shown in the figure, the coordinate transformer 30000 according to the embodiments receives positions and transforms the same into coordinates. For example, the positions may be transformed into position information in a three-dimensional space (e.g., a three-dimensional space represented by an XYZ coordinate system). The position information in the three-dimensional space according to the embodiments may be referred to as geometry information.

The quantizer 30001 according to the embodiments quantizes the geometry. For example, the quantizer 30001 may quantize the points based on a minimum position value of all points (e.g., a minimum value on each of the X, Y, and Z axes). The quantizer 30001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 30001 according to the embodiments performs voxelization based on the quantized positions to reconstruct quantized points. As in the case of a pixel, which is the minimum unit containing 2D image/video information, points of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 30001 may match groups of points in the 3D space with voxels. According to embodiments, one voxel may include only one point. According to embodiments, one voxel may include one or more points. In order to express one voxel as one point, the position of the center of a voxel may be set based on the positions of one or more points included in the voxel. In this case, attributes of all positions included in one voxel may be combined and assigned to the voxel.

The octree analyzer 30002 according to the embodiments performs octree geometry coding (or octree coding) to present voxels in an octree structure. The octree structure represents points matched with voxels, based on the octal tree structure.

The surface approximation analyzer 30003 according to the embodiments may analyze and approximate the octree. The octree analysis and approximation according to the embodiments is a process of analyzing a region containing a plurality of points to efficiently provide octree and voxelization.

The arithmetic encoder 30004 according to the embodiments performs entropy encoding on the octree and/or the approximated octree. For example, the encoding scheme includes arithmetic encoding. As a result of the encoding, a geometry bitstream is generated.

The color transformer 30006, the attribute transformer 30007, the RAHT transformer 30008, the LOD generator 30009, the lifting transformer 30010, the coefficient quantizer 30011, and/or the arithmetic encoder 30012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 30006 according to the embodiments performs color transform coding of transforming color values (or textures) included in the attributes. For example, the color transformer 30006 may transform the format of color information (for example, from RGB to YCbCr). The operation of the color transformer 30006 according to embodiments may be optionally applied according to the color values included in the attributes.

The geometry reconstructor 30005 according to the embodiments reconstructs (decompresses) the octree and/or the approximated octree. The geometry reconstructor 30005 reconstructs the octree/voxels based on the result of analyzing the distribution of points. The reconstructed octree/voxels may be referred to as reconstructed geometry (restored geometry).

The attribute transformer 30007 according to the embodiments performs attribute transformation to transform the attributes based on the reconstructed geometry and/or the positions on which geometry encoding is not performed. As described above, since the attributes are dependent on the geometry, the attribute transformer 30007 may transform the attributes based on the reconstructed geometry information. For example, based on the position value of a point included in a voxel, the attribute transformer 30007 may transform the attribute of the point at the position. As described above, when the position of the center of a voxel is set based on the positions of one or more points included in the voxel, the attribute transformer 30007 transforms the attributes of the one or more points. When the trisoup geometry encoding is performed, the attribute transformer 30007 may transform the attributes based on the trisoup geometry encoding.

The attribute transformer 30007 may perform the attribute transformation by calculating the average of attributes or attribute values of neighboring points (e.g., color or reflectance of each point) within a specific position/radius from the position (or position value) of the center of each voxel. The attribute transformer 30007 may apply a weight according to the distance from the center to each point in calculating the average. Accordingly, each voxel has a position and a calculated attribute (or attribute value).

The attribute transformer 30007 may search for neighboring points existing within a specific position/radius from the position of the center of each voxel based on the K-D tree or the Morton code. The K-D tree is a binary search tree and supports a data structure capable of managing points based on the positions such that nearest neighbor search (NNS) can be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 30007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 40008 and/or the LOD generator 30009.

The RAHT transformer 30008 according to the embodiments performs RAHT coding for predicting attribute information based on the reconstructed geometry information. For example, the RAHT transformer 30008 may predict attribute information of a node at a higher level in the octree based on the attribute information associated with a node at a lower level in the octree.

The LOD generator 30009 according to the embodiments generates a level of detail (LOD) to perform prediction transform coding. The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 30010 according to the embodiments performs lifting transform coding of transforming the attributes a point cloud based on weights. As described above, lifting transform coding may be optionally applied.

The coefficient quantizer 30011 according to the embodiments quantizes the attribute-coded attributes based on coefficients.

The arithmetic encoder 30012 according to the embodiments encodes the quantized attributes based on arithmetic coding.

Although not shown in the figure, the elements of the point cloud encoder of FIG. 3 may be implemented by hardware including one or more processors or integrated circuits configured to communicate with one or more memories included in the point cloud providing device, software, firmware, or a combination thereof. The one or more processors may perform at least one of the operations and/or functions of the elements of the point cloud encoder of FIG. 3 described above. Additionally, the one or more processors may operate or execute a set of software programs and/or instructions for performing the operations and/or functions of the elements of the point cloud encoder of FIG. 3. The one or more memories according to the embodiments may include a high speed random access memory, or include a non-volatile memory (e.g., one or more magnetic disk storage devices, flash memory devices, or other non-volatile solid-state memory devices).

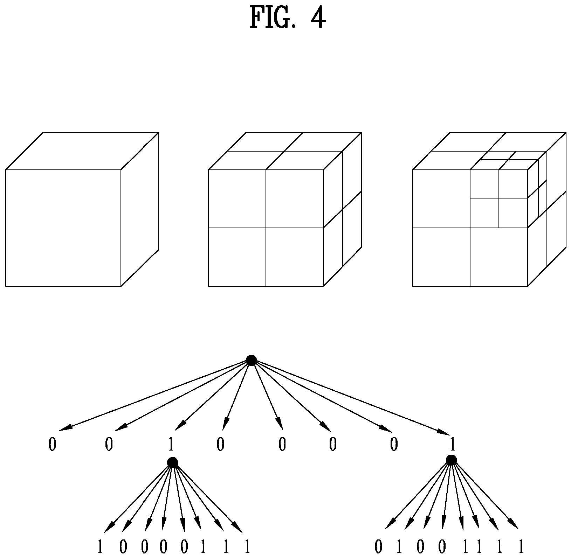

FIG. 4 shows an example of an octree and occupancy code according to embodiments.

As described with reference to FIGS. 1 to 3, the point cloud content providing system (point cloud video encoder 10002) or the point cloud encoder (e.g., the octree analyzer 30002) performs octree geometry coding (or octree coding) based on an octree structure to efficiently manage the region and/or position of the voxel.

The upper part of FIG. 4 shows an octree structure. The 3D space of the point cloud content according to the embodiments is represented by axes (e.g., X-axis, Y-axis, and Z-axis) of the coordinate system. The octree structure is created by recursive subdividing of a cubical axis-aligned bounding box defined by two poles $(0, 0, 0)$ and $(2^d, 2^d, 2^d)$. Here, $2^d$ may be set to a value constituting the smallest bounding box surrounding all points of the point cloud content (or point cloud video). Here, d denotes the depth of the octree. The value of d is determined in the following equation. In the following equation, $(x^{int}_n, y^{int}_n, z^{int}_n)$ denotes the positions (or position values) of quantized points.

$$d = \text{Ceil}\left(\text{Log2}\left(\text{Max}\left(x_n^{int}, y_n^{int}, z_n^{in}, n = 1, ..., N\right) + 1\right)\right)$$

As shown in the middle of the upper part of FIG. 4, the entire 3D space may be divided into eight spaces according to partition. Each divided space is represented by a cube with six faces. As shown in the upper right of FIG. 4, each of the eight spaces is divided again based on the axes of the coordinate system (e.g., X-axis, Y-axis, and Z-axis). Accordingly, each space is divided into eight smaller spaces. The divided smaller space is also represented by a cube with six faces. This partitioning scheme is applied until the leaf node of the octree becomes a voxel.

The lower part of FIG. 4 shows an octree occupancy code. The occupancy code of the octree is generated to indicate whether each of the eight divided spaces generated by dividing one space contains at least one point. Accordingly, a single occupancy code is represented by eight child nodes. Each child node represents the occupancy of a divided space, and the child node has a value in 1 bit. Accordingly, the occupancy code is represented as an 8-bit code. That is, when at least one point is contained in the space corresponding to a child node, the node is assigned a value of 1. When no point is contained in the space corresponding to the child node (the space is empty), the node is assigned a value of 0. Since the occupancy code shown in FIG. 4 is 00100001, it indicates that the spaces corresponding to the third child node and the eighth child node among the eight child nodes each contain at least one point. As shown in the figure, each of the third child node and the eighth child node has eight child nodes, and the child nodes are represented by an 8-bit occupancy code. The figure shows that the occupancy code of the third child node is 10000111, and the occupancy code of the eighth child node is 01001111. The point cloud encoder (e.g., the arithmetic encoder 30004) according to the embodiments may perform entropy encoding on the occupancy codes. In order to increase the compression efficiency, the point cloud encoder may perform intra/inter-coding on the occupancy codes. The reception device (e.g., the reception device 10004 or the point cloud video decoder 10006) according to the embodiments reconstructs the octree based on the occupancy codes.

The point cloud encoder (e.g., the point cloud encoder of FIG. 4 or the octree analyzer 30002) according to the embodiments may perform voxelization and octree coding to store the positions of points. However, points are not always evenly distributed in the 3D space, and accordingly there may be a specific region in which fewer points are present. Accordingly, it is inefficient to perform voxelization for the entire 3D space. For example, when a specific region contains few points, voxelization does not need to be performed in the specific region.

Accordingly, for the above-described specific region (or a node other than the leaf node of the octree), the point cloud encoder according to the embodiments may skip voxelization and perform direct coding to directly code the positions of points included in the specific region. The coordinates of a direct coding point according to the embodiments are referred to as direct coding mode (DCM). The point cloud encoder according to the embodiments may also perform trisoup geometry encoding, which is to reconstruct the positions of the points in the specific region (or node) based on voxels, based on a surface model. The trisoup geometry encoding is geometry encoding that represents an object as a series of triangular meshes. Accordingly, the point cloud decoder may generate a point cloud from the mesh surface. The direct coding and trisoup geometry encoding according to the embodiments may be selectively performed. In addition, the direct coding and trisoup geometry encoding according to the embodiments may be performed in combination with octree geometry coding (or octree coding).

To perform direct coding, the option to use the direct mode for applying direct coding should be activated. A node to which direct coding is to be applied is not a leaf node, and points less than a threshold should be present within a specific node. In addition, the total number of points to which direct coding is to be applied should not exceed a preset threshold. When the conditions above are satisfied, the point cloud encoder (or the arithmetic encoder 30004) according to the embodiments may perform entropy coding on the positions (or position values) of the points.

The point cloud encoder (e.g., the surface approximation analyzer 30003) according to the embodiments may determine a specific level of the octree (a level less than the depth d of the octree), and the surface model may be used staring with that level to perform trisoup geometry encoding to reconstruct the positions of points in the region of the node based on voxels (Trisoup mode). The point cloud encoder according to the embodiments may specify a level at which trisoup geometry encoding is to be applied. For example, when the specific level is equal to the depth of the octree, the point cloud encoder does not operate in the trisoup mode. In other words, the point cloud encoder according to the embodiments may operate in the trisoup mode only when the specified level is less than the value of depth of the octree. The 3D cube region of the nodes at the specified level according to the embodiments is called a block. One block may include one or more voxels. The block or voxel may correspond to a brick. Geometry is represented as a surface within each block. The surface according to embodiments may intersect with each edge of a block at most once.

One block has 12 edges, and accordingly there are at least 12 intersections in one block. Each intersection is called a vertex (or apex). A vertex present along an edge is detected when there is at least one occupied voxel adjacent to the edge among all blocks sharing the edge. The occupied voxel according to the embodiments refers to a voxel containing a point. The position of the vertex detected along the edge is the average position along the edge of all voxels adjacent to the edge among all blocks sharing the edge.

Once the vertex is detected, the point cloud encoder according to the embodiments may perform entropy encoding on the starting point (x, y, z) of the edge, the direction vector ($\Delta$x, $\Delta$y, $\Delta$z) of the edge, and the vertex position value (relative position value within the edge). When the trisoup geometry encoding is applied, the point cloud encoder according to the embodiments (e.g., the geometry reconstructor 30005) may generate restored geometry (reconstructed geometry) by performing the triangle reconstruction, up-sampling, and voxelization processes.

The vertices positioned at the edge of the block determine a surface that passes through the block. The surface according to the embodiments is a non-planar polygon. In the triangle reconstruction process, a surface represented by a triangle is reconstructed based on the starting point of the edge, the direction vector of the edge, and the position values of the vertices. The triangle reconstruction process is performed by: i) calculating the centroid value of each vertex, ii) subtracting the center value from each vertex value, and iii) estimating the sum of the squares of the values obtained by the subtraction.

$$\text{i) } \begin{bmatrix} \mu_x \\ \mu_y \\ \mu_z \end{bmatrix} = \frac{1}{n} \sum_{i=1}^{n} \begin{bmatrix} x_i \\ y_i \\ z_i \end{bmatrix}; \quad \text{ii) } \begin{bmatrix} \bar{x}_i \\ \bar{y}_i \\ \bar{z}_i \end{bmatrix} = \begin{bmatrix} x_i \\ y_i \\ z_i \end{bmatrix} - \begin{bmatrix} \mu_x \\ \mu_y \\ \mu_z \end{bmatrix}; \quad \text{iii) } \begin{bmatrix} \sigma_x^2 \\ \sigma_y^2 \\ \sigma_z^2 \end{bmatrix} = \sum_{i=1}^{n} \begin{bmatrix} \bar{x}_i^2 \\ \bar{y}_i^2 \\ \bar{z}_i^2 \end{bmatrix}$$

The minimum value of the sum is estimated, and the projection process is performed according to the axis with the minimum value. For example, when the element x is the minimum, each vertex is projected on the x-axis with respect to the center of the block, and projected on the (y, z) plane. When the values obtained through projection on the (y, z) plane are (ai, bi), the value of $\theta$ is estimated through atan2(bi, ai), and the vertices are ordered based on the value of $\theta$. The table below shows a combination of vertices for creating a triangle according to the number of the vertices. The vertices are ordered from 1 to n. The table below shows that for four vertices, two triangles may be constructed according to combinations of vertices. The first triangle may consist of vertices 1, 2, and 3 among the ordered vertices, and the second triangle may consist of vertices 3, 4, and 1 among the ordered vertices.

Triangles formed from vertices ordered 1,...,n

```
n triangles
3 (1,2,3)
4 (1,2,3), (3,4,1)
5 (1,2,3), (3,4,5), (5,1,3)
6 (1,2,3), (3,4,5), (5,6,1), (1,3,5)
7 (1,2,3), (3,4,5), (5,6,7), (7,1,3), (3,5,7)
8 (1,2,3), (3,4,5), (5,6,7), (7,8,1), (1,3,5), (5,7,1)
9 (1,2,3), (3,4,5), (5,6,7), (7,8,9), (9,1,3), (3,5,7), (7,9,3)
10 (1,2,3), (3,4,5), (5,6,7), (7,8,9), (9,10,1), (1,3,5), (5,7,9), (9,1,5)
11 (1,2,3), (3,4,5), (5,6,7), (7,8,9), (9,10,11), (11,1,3), (3,5,7), (7,9,11), (11,3,7)
12 (1,2,3), (3,4,5), (5,6,7), (7,8,9), (9,10,11), (11,12,1), (1,3,5), (5,7,9), (9,11,1), (1,5,9)
```

The upsampling process is performed to add points in the middle along the edge of the triangle and perform voxelization. The added points are generated based on the upsampling factor and the width of the block. The added points are called refined vertices. The point cloud encoder according to the embodiments may voxelize the refined vertices. In addition, the point cloud encoder may perform attribute encoding based on the voxelized positions (or position values).

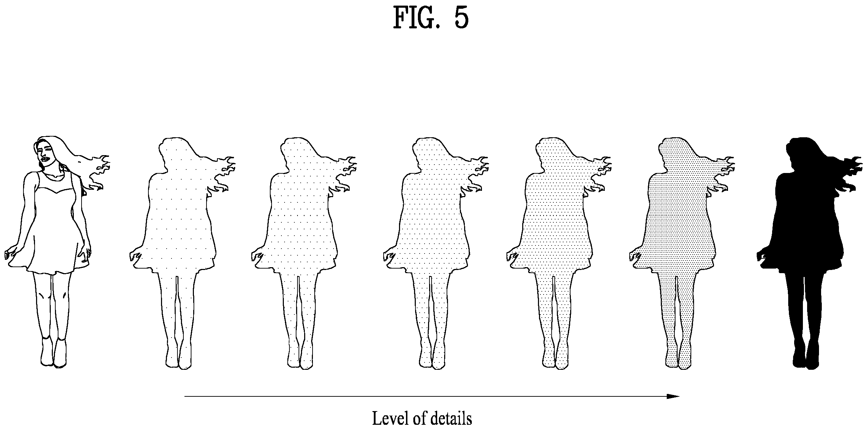

FIG. 5 illustrates an example of point configuration in each LOD according to embodiments.

As described with reference to FIGS. 1 to 4, encoded geometry is reconstructed (decompressed) before attribute encoding is performed. When direct coding is applied, the geometry reconstruction operation may include changing the placement of direct coded points (e.g., placing the direct coded points in front of the point cloud data). When trisoup geometry encoding is applied, the geometry reconstruction process is performed through triangle reconstruction, up-sampling, and voxelization. Since the attribute depends on the geometry, attribute encoding is performed based on the reconstructed geometry.

The point cloud encoder (e.g., the LOD generator 30009) may classify (or reorganize) points by LOD. The figure shows the point cloud content corresponding to LODs. The leftmost picture in the figure represents original point cloud content. The second picture from the left of the figure represents distribution of the points in the lowest LOD, and the rightmost picture in the figure represents distribution of the points in the highest LOD. That is, the points in the lowest LOD are sparsely distributed, and the points in the highest LOD are densely distributed. That is, as the LOD rises in the direction pointed by the arrow indicated at the bottom of the figure, the space (or distance) between points is narrowed.

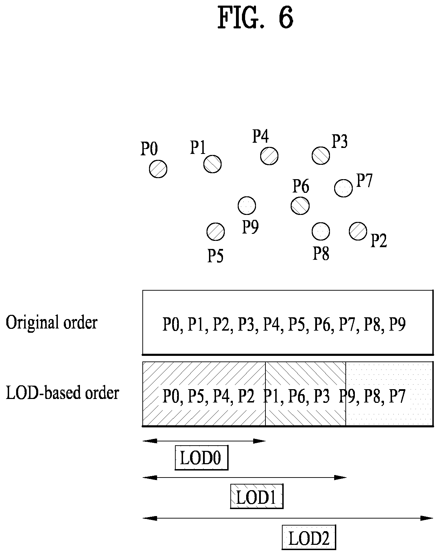

FIG. 6 illustrates an example of point configuration for each LOD according to embodiments.

As described with reference to FIGS. 1 to 5, the point cloud content providing system, or the point cloud encoder (e.g., the point cloud video encoder 10002, the point cloud encoder of FIG. 3, or the LOD generator 30009) may generates an LOD. The LOD is generated by reorganizing the points into a set of refinement levels according to a set LOD distance value (or a set of Euclidean distances). The LOD generation process is performed not only by the point cloud encoder, but also by the point cloud decoder.

The upper part of FIG. 6 shows examples (P0 to P9) of points of the point cloud content distributed in a 3D space. In FIG. 6, the original order represents the order of points P0 to P9 before LOD generation. In FIG. 6, the LOD based order represents the order of points according to the LOD generation. Points are reorganized by LOD. Also, a high LOD contains the points belonging to lower LODs. As shown in FIG. 6, LOD0 contains P0, P5, P4 and P2. LOD1 contains the points of LOD0, P1, P6 and P3. LOD2 contains the points of LOD0, the points of LOD1, P9, P8 and P7.

As described with reference to FIG. 3, the point cloud encoder according to the embodiments may perform prediction transform coding, lifting transform coding, and RAHT transform coding selectively or in combination.

The point cloud encoder according to the embodiments may generate a predictor for points to perform prediction transform coding for setting a predicted attribute (or predicted attribute value) of each point. That is, N predictors may be generated for N points. The predictor according to the embodiments may calculate a weight (=1/distance) based on the LOD value of each point, indexing information about neighboring points present within a set distance for each LOD, and a distance to the neighboring points.

The predicted attribute (or attribute value) according to the embodiments is set to the average of values obtained by multiplying the attributes (or attribute values) (e.g., color, reflectance, etc.) of neighbor points set in the predictor of each point by a weight (or weight value) calculated based on the distance to each neighbor point. The point cloud encoder according to the embodiments (e.g., the coefficient quantizer 30011) may quantize and inversely quantize the residuals (which may be called residual attributes, residual attribute values, or attribute prediction residuals, attribute residuals) obtained by subtracting a predicted attribute (attribute value) from the attribute (attribute value) of each point. The quantization process is configured as shown in the following table.

TABLE 1 Attribute prediction residuals quantization pseudo code

```
int PCCQuantization(int value, int quantStep) {
if( value >=0) {
return floor(value / quantStep + 1.0 / 3.0);
} else {
return -floor(-value / quantStep + 1.0 / 3.0);
}
}
```

TABLE 2 Attribute prediction residuals inverse quantization pseudo code

```
int PCCInverseQuantization(int value, int quantStep) {
if( quantStep ==0) {
return value;
} else {
return value * quantStep;
}
}
```

When the predictor of each point has neighbor points, the point cloud encoder (e.g., the arithmetic encoder 30012) according to the embodiments may perform entropy coding on the quantized and inversely quantized residual values as described above. When the predictor of each point has no neighbor point, the point cloud encoder according to the embodiments (e.g., the arithmetic encoder 30012) may perform entropy coding on the attributes of the corresponding point without performing the above-described operation.

The point cloud encoder according to the embodiments (e.g., the lifting transformer 30010) may generate a predictor of each point, set the calculated LOD and register neighbor points in the predictor, and set weights according to the distances to neighbor points to perform lifting transform coding. The lifting transform coding according to the embodiments is similar to the above-described prediction transform coding, but differs therefrom in that weights are cumulatively applied to attribute values. The process of cumulatively applying weights to the attribute values according to embodiments is configured as follows.

1) Create an array Quantization Weight (QW) for storing the weight value of each point. The initial value of all elements of QW is 1.0. Multiply the QW values of the predictor indexes of the neighbor nodes registered in the predictor by the weight of the predictor of the current point, and add the values obtained by the multiplication.

2) Lift prediction process: Subtract the value obtained by multiplying the attribute value of the point by the weight from the existing attribute value to calculate a predicted attribute value.

3) Create temporary arrays called updateweight and update and initialize the temporary arrays to zero.

4) Cumulatively add the weights calculated by multiplying the weights calculated for all predictors by a weight stored in the QW corresponding to a predictor index to the updateweight array as indexes of neighbor nodes. Cumulatively add, to the update array, a value obtained by multiplying the attribute value of the index of a neighbor node by the calculated weight.

5) Lift update process: Divide the attribute values of the update array for all predictors by the weight value of the updateweight array of the predictor index, and add the existing attribute value to the values obtained by the division.

6) Calculate predicted attributes by multiplying the attribute values updated through the lift update process by the weight updated through the lift prediction process (stored in the QW) for all predictors. The point cloud encoder (e.g., coefficient quantizer 30011) according to the embodiments quantizes the predicted attribute values. In addition, the point cloud encoder (e.g., the arithmetic encoder 30012) performs entropy coding on the quantized attribute values.

The point cloud encoder (for example, the RAHT transformer 30008) according to the embodiments may perform RAHT transform coding in which attributes of nodes of a higher level are predicted using the attributes associated with nodes of a lower level in the octree. RAHT transform coding is an example of attribute intra coding through an octree backward scan. The point cloud encoder according to the embodiments scans the entire region from the voxel and repeats the merging process of merging the voxels into a larger block at each step until the root node is reached. The merging process according to the embodiments is performed only on the occupied nodes. The merging process is not performed on the empty node. The merging process is performed on an upper node immediately above the empty node.

The equation below represents a RAHT transformation matrix. In the equation, $g_{l x,y,z}$ denotes the average attribute value of voxels at level l. $g_{l x,y,z}$ may be calculated based on $g_{l+1 2x,y,z}$ and $g_{l+1 2x+1,y,z}$. The weights for $g_{l 2x,y,z}$ and $g_{l 2x+1,y,z}$ are w1 = $w_{l 2x,y,z}$ and w2 = $w_{l\ 2x+1,y,z}$.

$$\begin{bmatrix} g_{l-1_{x,y,z}} \\ h_{l-1_{x,y,z}} \end{bmatrix} = T_{w1\ w2} \begin{bmatrix} g_{l_{2x,y,z}} \\ g_{l_{2x+1,y,z}} \end{bmatrix}, \quad T_{w1\ w2} = \frac{1}{\sqrt{w1+w2}} \begin{bmatrix} \sqrt{w1} & \sqrt{w2} \\ -\sqrt{w2} & \sqrt{w1} \end{bmatrix}$$

Here, $g_{l-1_{x,y,z}}$ is a low-pass value and is used in the merging process at the next higher level. $h_{l-1_{x,y,z}}$ denotes high-pass coefficients. The high-pass coefficients at each step are quantized and subjected to entropy coding (e.g., encoding by the arithmetic encoder 300012). The weights are calculated as $w_{l-1_{x,y,z}} = w_{l_{2x,y,z}} + w_{l_{2x+1,y,z}}$. The root node is created through the $g_{1_{0,0,0}}$ and $g_{1_{0,0,1}}$ as follows.

$$\begin{bmatrix} gDC \\ h_{0_{0,0,0}} \end{bmatrix} = T_{w1000\ w1001} \begin{bmatrix} g_{1_{0,0,0z}} \\ g_{1_{0,0,1}} \end{bmatrix}$$

The value of gDC is also quantized and subjected to entropy coding like the high-pass coefficients.

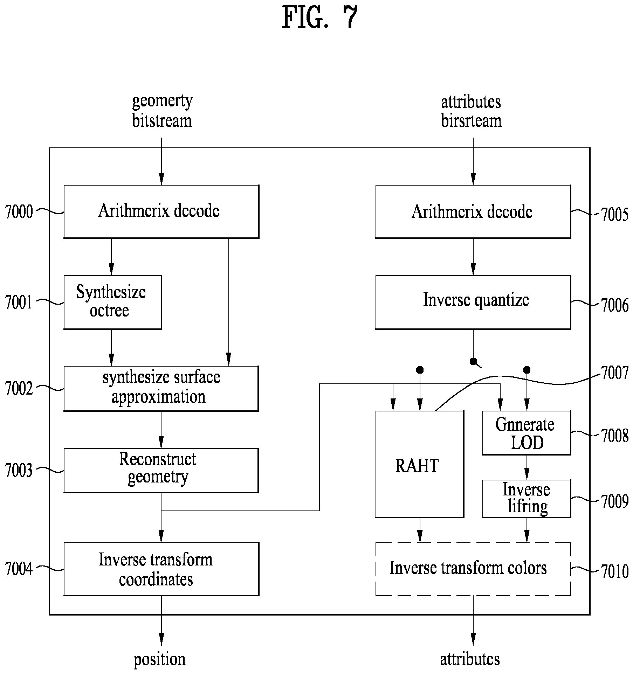

FIG. 7 illustrates a point cloud decoder according to embodiments.

The point cloud decoder illustrated in FIG. 7 is an example of the point cloud decoder and may perform a decoding operation, which is a reverse process to the encoding operation of the point cloud encoder illustrated in FIGS. 1 to 6.

As described with reference to FIGS. 1 and 6, the point cloud decoder may perform geometry decoding and attribute decoding. The geometry decoding is performed before the attribute decoding.

The point cloud decoder according to the embodiments includes an arithmetic decoder (Arithmetic decode) 7000, an octree synthesizer (Synthesize octree) 7001, a surface approximation synthesizer (Synthesize surface approximation) 7002, and a geometry reconstructor (Reconstruct geometry) 7003, a coordinate inverse transformer (Inverse transform coordinates) 7004, an arithmetic decoder (Arithmetic decode) 7005, an inverse quantizer (Inverse quantize) 7006, a RAHT transformer 7007, an LOD generator (Generate LOD) 7008, an inverse lifter (inverse lifting) 7009, and/or a color inverse transformer (Inverse transform colors) 7010.

The arithmetic decoder 7000, the octree synthesizer 7001, the surface approximation synthesizer 7002, and the geometry reconstructor 7003, and the coordinate inverse transformer 7004 may perform geometry decoding. The geometry decoding according to the embodiments may include direct decoding and trisoup geometry decoding. The direct coding and trisoup geometry decoding are selectively applied. The geometry decoding is not limited to the above-described example, and is performed as a reverse process to the geometry encoding described with reference to FIGS. 1 to 6.

The arithmetic decoder 7000 according to the embodiments decodes the received geometry bitstream based on the arithmetic coding. The operation of the arithmetic decoder 7000 corresponds to the reverse process to the arithmetic encoder 30004.

The octree synthesizer 7001 according to the embodiments may generate an octree by acquiring an occupancy code from the decoded geometry bitstream (or information on the geometry secured as a result of decoding). The occupancy code is configured as described in detail with reference to FIGS. 1 to 6.

When the trisoup geometry encoding is applied, the surface approximation synthesizer 7002 according to the embodiments may synthesize a surface based on the decoded geometry and/or the generated octree.

The geometry reconstructor 7003 according to the embodiments may regenerate geometry based on the surface and/or the decoded geometry. As described with reference to FIGS. 1 to 9, direct coding and trisoup geometry encoding are selectively applied. Accordingly, the geometry reconstructor 7003 directly imports and adds position information about the points to which direct coding is applied. When the trisoup geometry encoding is applied, the geometry reconstructor 7003 may reconstruct the geometry by performing the reconstruction operations of the geometry reconstructor 30005, for example, triangle reconstruction, up-sampling, and voxelization. Details are the same as those described with reference to FIG. 6, and thus description thereof is omitted. The reconstructed geometry may include a point cloud picture or frame that does not contain attributes.

The coordinate inverse transformer 7004 according to the embodiments may acquire positions of the points by transforming the coordinates based on the reconstructed geometry.

The arithmetic decoder 7005, the inverse quantizer 7006, the RAHT transformer 7007, the LOD generator 7008, the inverse lifter 7009, and/or the color inverse transformer 7010 may perform the attribute decoding described with reference to FIG. 6. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 7005 according to the embodiments decodes the attribute bitstream by arithmetic coding.

The inverse quantizer 7006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud encoder.

According to embodiments, the RAHT transformer 7007, the LOD generator 7008, and/or the inverse lifter 7009 may process the reconstructed geometry and the inversely quantized attributes. As described above, the RAHT transformer 7007, the LOD generator 7008, and/or the inverse lifter 7009 may selectively perform a decoding operation corresponding to the encoding of the point cloud encoder.

The color inverse transformer 7010 according to the embodiments performs inverse transform coding to inversely transform a color value (or texture) included in the decoded attributes. The operation of the color inverse transformer 7010 may be selectively performed based on the operation of the color transformer 30006 of the point cloud encoder.

Although not shown in the figure, the elements of the point cloud decoder of FIG. 7 may be implemented by hardware including one or more processors or integrated circuits configured to communicate with one or more memories included in the point cloud providing device, software, firmware, or a combination thereof. The one or more processors may perform at least one or more of the operations and/or functions of the elements of the point cloud decoder of FIG. 7 described above. Additionally, the one or more processors may operate or execute a set of software programs and/or instructions for performing the operations and/or functions of the elements of the point cloud decoder of FIG. 7.

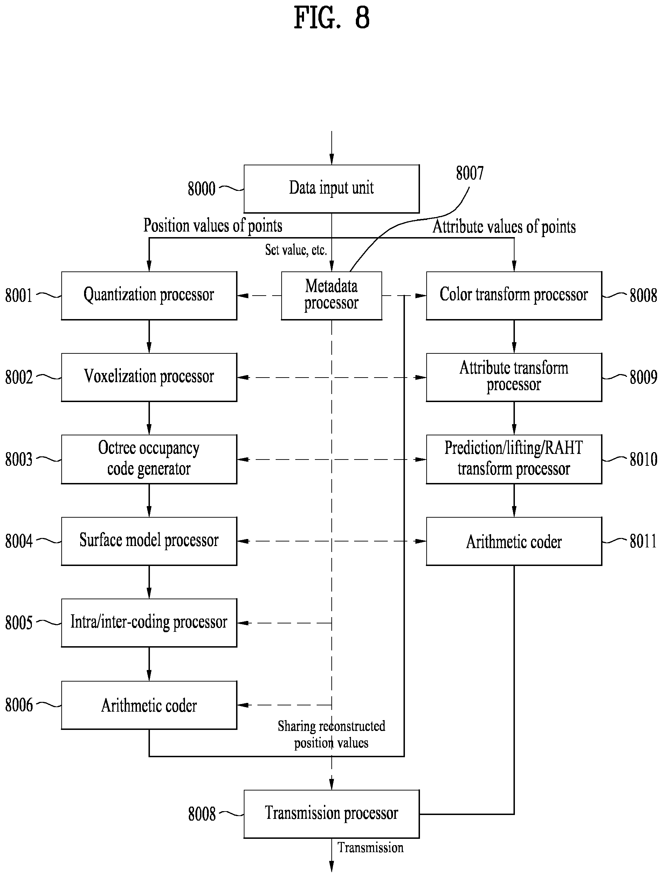

FIG. 8 illustrates a transmission device according to embodiments.

The transmission device shown in FIG. 8 is an example of the transmission device 10000 of FIG. 1 (or the point cloud encoder of FIG. 3). The transmission device illustrated in FIG. 8 may perform one or more of the operations and methods the same as or similar to those of the point cloud encoder described with reference to FIGS. 1 to 6. The transmission device according to the embodiments may include a data input unit 8000, a quantization processor 8001, a voxelization processor 8002, an octree occupancy code generator 8003, a surface model processor 8004, an intra/inter-coding processor 8005, an arithmetic coder 8006, a metadata processor 8007, a color transform processor 8008, an attribute transform processor 8009, a prediction/lifting/RAHT transform processor 8010, an arithmetic coder 8011 and/or a transmission processor 8012.

The data input unit 8000 according to the embodiments receives or acquires point cloud data. The data input unit 8000 may perform an operation and/or acquisition method the same as or similar to the operation and/or acquisition method of the point cloud video acquirer 10001 (or the acquisition process 20000 described with reference to FIG. 2).

The data input unit 8000, the quantization processor 8001, the voxelization processor 8002, the octree occupancy code generator 8003, the surface model processor 8004, the intra/inter-coding processor 8005, and the arithmetic coder 8006 perform geometry encoding. The geometry encoding according to the embodiments is the same as or similar to the geometry encoding described with reference to FIGS. 1 to 9, and thus a detailed description thereof is omitted.

The quantization processor 8001 according to the embodiments quantizes geometry (e.g., position values of points). The operation and/or quantization of the quantization processor 8001 is the same as or similar to the operation and/or quantization of the quantizer 30001 described with reference to FIG. 3. Details are the same as those described with reference to FIGS. 1 to 9.

The voxelization processor 8002 according to the embodiments voxelizes the quantized position values of the points. The voxelization processor 8002 may perform an operation and/or process the same or similar to the operation and/or the voxelization process of the quantizer 30001 described with reference to FIG. 3. Details are the same as those described with reference to FIGS. 1 to 6.

The octree occupancy code generator 8003 according to the embodiments performs octree coding on the voxelized positions of the points based on an octree structure. The octree occupancy code generator 8003 may generate an occupancy code. The octree occupancy code generator 8003 may perform an operation and/or method the same as or similar to the operation and/or method of the point cloud encoder (or the octree analyzer 30002) described with reference to FIGS. 3 and 4. Details are the same as those described with reference to FIGS. 1 to 6.

The surface model processor 8004 according to the embodiments may perform trisoup geometry encoding based on a surface model to reconstruct the positions of points in a specific region (or node) on a voxel basis. The surface model processor 8004 may perform an operation and/or method the same as or similar to the operation and/or method of the point cloud encoder (e.g., the surface approximation analyzer 30003) described with reference to FIG. 3. Details are the same as those described with reference to FIGS. 1 to 6.

The intra/inter-coding processor 8005 according to the embodiments may perform intra/inter-coding on point cloud data. The intra/inter-coding processor 8005 may perform coding the same as or similar to the intra/inter-coding described with reference to FIG. 7. Details are the same as those described with reference to FIG. 7. According to embodiments, the intra/inter-coding processor 8005 may be included in the arithmetic coder 8006.

The arithmetic coder 8006 according to the embodiments performs entropy encoding on an octree of the point cloud data and/or an approximated octree. For example, the encoding scheme includes arithmetic encoding. The arithmetic coder 8006 performs an operation and/or method the same as or similar to the operation and/or method of the arithmetic encoder 30004.

The metadata processor 8007 according to the embodiments processes metadata about the point cloud data, for example, a set value, and provides the same to a necessary processing process such as geometry encoding and/or attribute encoding. Also, the metadata processor 8007 according to the embodiments may generate and/or process signaling information related to the geometry encoding and/or the attribute encoding. The signaling information according to the embodiments may be encoded separately from the geometry encoding and/or the attribute encoding. The signaling information according to the embodiments may be interleaved.

The color transform processor 8008, the attribute transform processor 8009, the prediction/lifting/RAHT transform processor 8010, and the arithmetic coder 8011 perform the attribute encoding. The attribute encoding according to the embodiments is the same as or similar to the attribute encoding described with reference to FIGS. 1 to 6, and thus a detailed description thereof is omitted.

The color transform processor 8008 according to the embodiments performs color transform coding to transform color values included in attributes. The color transform processor 8008 may perform color transform coding based on the reconstructed geometry. The reconstructed geometry is the same as described with reference to FIGS. 1 to 9. Also, it performs an operation and/or method the same as or similar to the operation and/or method of the color transformer 30006 described with reference to FIG. 3 is performed. A detailed description thereof is omitted.

The attribute transform processor 8009 according to the embodiments performs attribute transformation to transform the attributes based on the reconstructed geometry and/or the positions on which geometry encoding is not performed. The attribute transform processor 8009 performs an operation and/or method the same as or similar to the operation and/or method of the attribute transformer 30007 described with reference to FIG. 3. A detailed description thereof is omitted. The prediction/lifting/RAHT transform processor 8010 according to the embodiments may code the transformed attributes by any one or a combination of RAHT coding, prediction transform coding, and lifting transform coding. The prediction/lifting/RAHT transform processor 8010 performs at least one of the operations the same as or similar to the operations of the RAHT transformer 30008, the LOD generator 30009, and the lifting transformer 30010 described with reference to FIG. 3. In addition, the prediction transform coding, the lifting transform coding, and the RAHT transform coding are the same as those described with reference to FIGS. 1 to 9, and thus a detailed description thereof is omitted.

The arithmetic coder 8011 according to the embodiments may encode the coded attributes based on the arithmetic coding. The arithmetic coder 8011 performs an operation and/or method the same as or similar to the operation and/or method of the arithmetic encoder 300012.

The transmission processor 8012 according to the embodiments may transmit each bitstream containing encoded geometry and/or encoded attributes and metadata information, or transmit one bitstream configured with the encoded geometry and/or the encoded attributes and the metadata information. When the encoded geometry and/or the encoded attributes and the metadata information according to the embodiments are configured into one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS) for signaling of a tile level, and slice data. The slice data may include information about one or more slices. One slice according to embodiments may include one geometry bitstream $Geom0^0$ and one or more attribute bitstreams $Attr0^0$ and $Attr1^0$.

A slice refers to a series of syntax elements representing the entirety or part of a coded point cloud frame.

The TPS according to the embodiments may include information about each tile (e.g., coordinate information and height/size information about a bounding box) for one or more tiles. The geometry bitstream may contain a header and a payload. The header of the geometry bitstream according to the embodiments may contain a parameter set identifier (geom_parameter_set_id), a tile identifier (geom_tile_id) and a slice identifier (geom_slice_id) included in the GPS, and information about the data contained in the payload. As described above, the metadata processor 8007 according to the embodiments may generate and/or process the signaling information and transmit the same to the transmission processor 8012. According to embodiments, the elements to perform geometry encoding and the elements to perform attribute encoding may share data/information with each other as indicated by dotted lines. The transmission processor 8012 according to the embodiments may perform an operation and/or transmission method the same as or similar to the operation and/or transmission method of the transmitter 10003. Details are the same as those described with reference to FIGS. 1 and 2, and thus a description thereof is omitted.

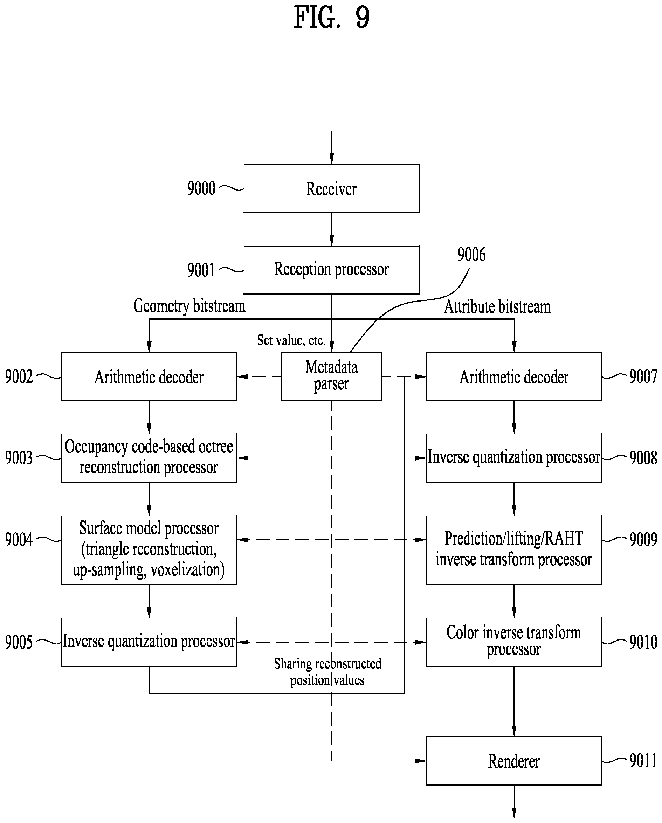

FIG. 9 illustrates a reception device according to embodiments.

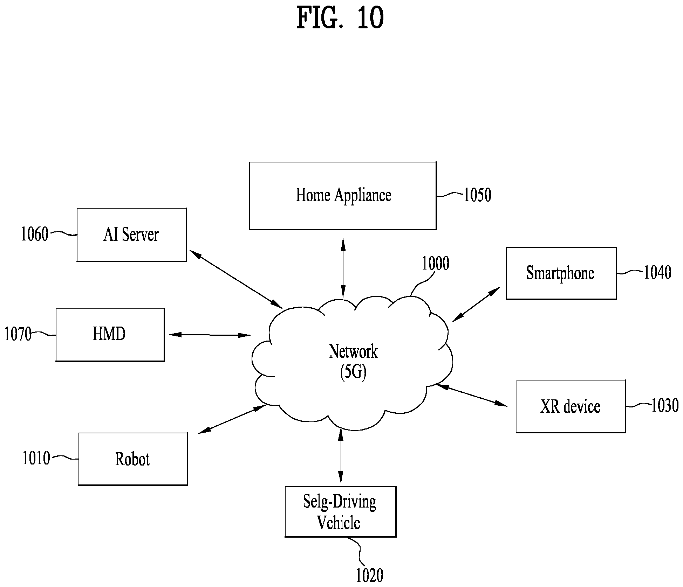

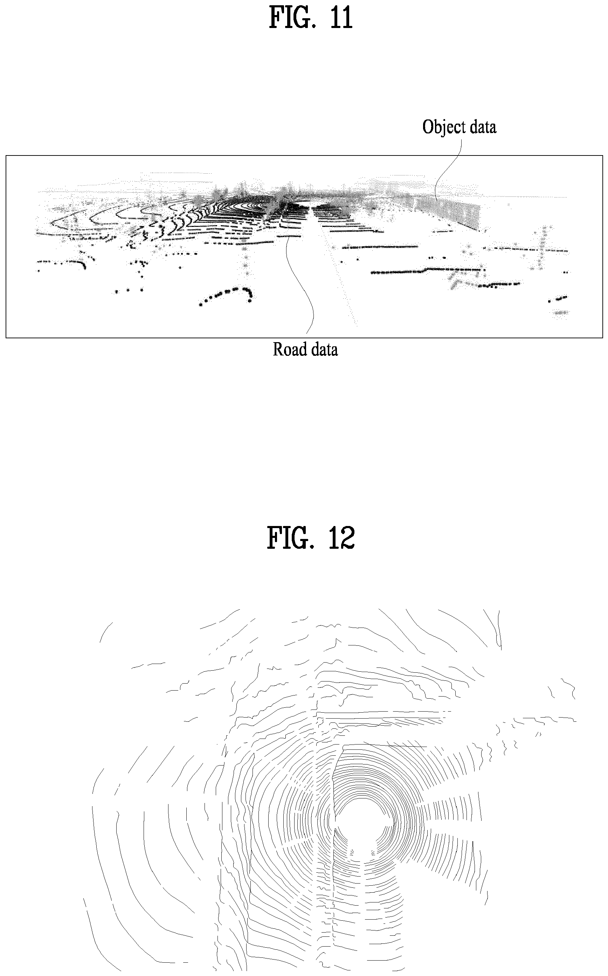

The reception device illustrated in FIG. 9 is an example of the reception device 10004 of FIG. 1 (or the point cloud decoder of FIGS. 10 and 11). The reception device illustrated in FIG. 9 may perform one or more of the operations and methods the same as or similar to those of the point cloud decoder described with reference to FIGS. 1 to 11.

The reception device according to the embodiment may include a receiver 9000, a reception processor 9001, an arithmetic decoder 9002, an occupancy code-based octree reconstruction processor 9003, a surface model processor (triangle reconstruction, up-sampling, voxelization) 9004, an inverse quantization processor 9005, a metadata parser 9006, an arithmetic decoder 9007, an inverse quantization processor 9008, a prediction/lifting/RAHT inverse transform processor 9009, a color inverse transform processor 9010, and/or a renderer 9011. Each element for decoding according to the embodiments may perform a reverse process to the operation of a corresponding element for encoding according to the embodiments.

The receiver 9000 according to the embodiments receives point cloud data. The receiver 9000 may perform an operation and/or reception method the same as or similar to the operation and/or reception method of the receiver 10005 of FIG. 1. The detailed description thereof is omitted.

The reception processor 9001 according to the embodiments may acquire a geometry bitstream and/or an attribute bitstream from the received data. The reception processor 9001 may be included in the receiver 9000.

The arithmetic decoder 9002, the occupancy code-based octree reconstruction processor 9003, the surface model processor 9004, and the inverse quantization processor 905 may perform geometry decoding. The geometry decoding according to embodiments is the same as or similar to the geometry decoding described with reference to FIGS. 1 to 10, and thus a detailed description thereof is omitted.

The arithmetic decoder 9002 according to the embodiments may decode the geometry bitstream based on arithmetic coding. The arithmetic decoder 9002 performs an operation and/or coding the same as or similar to the operation and/or coding of the arithmetic decoder 7000.

The occupancy code-based octree reconstruction processor 9003 according to the embodiments may reconstruct an octree by acquiring an occupancy code from the decoded geometry bitstream (or information about the geometry secured as a result of decoding). The occupancy code-based octree reconstruction processor 9003 performs an operation and/or method the same as or similar to the operation and/or octree generation method of the octree synthesizer 7001. When the trisoup geometry encoding is applied, the surface model processor 9004 according to the embodiments may perform trisoup geometry decoding and related geometry reconstruction (e.g., triangle reconstruction, up-sampling, voxelization) based on the surface model method. The surface model processor 9004 performs an operation the same as or similar to that of the surface approximation synthesizer 7002 and/or the geometry reconstructor 7003.

The inverse quantization processor 9005 according to the embodiments may inversely quantize the decoded geometry.

The metadata parser 9006 according to the embodiments may parse metadata contained in the received point cloud data, for example, a set value. The metadata parser 9006 may pass the metadata to geometry decoding and/or attribute decoding. The metadata is the same as that described with reference to FIG. 8, and thus a detailed description thereof is omitted.

The arithmetic decoder 9007, the inverse quantization processor 9008, the prediction/lifting/RAHT inverse transform processor 9009 and the color inverse transform processor 9010 perform attribute decoding. The attribute decoding is the same as or similar to the attribute decoding described with reference to FIGS. 1 to 10, and thus a detailed description thereof is omitted.

The arithmetic decoder 9007 according to the embodiments may decode the attribute bitstream by arithmetic coding. The arithmetic decoder 9007 may decode the attribute bitstream based on the reconstructed geometry. The arithmetic decoder 9007 performs an operation and/or coding the same as or similar to the operation and/or coding of the arithmetic decoder 7005.

The inverse quantization processor 9008 according to the embodiments may inversely quantize the decoded attribute bitstream. The inverse quantization processor 9008 performs an operation and/or method the same as or similar to the operation and/or inverse quantization method of the inverse quantizer 7006.

The prediction/lifting/RAHT inverse transform processor 9009 according to the embodiments may process the reconstructed geometry and the inversely quantized attributes. The prediction/lifting/RAHT inverse transform processor 9009 performs one or more of operations and/or decoding the same as or similar to the operations and/or decoding of the RAHT transformer 7007, the LOD generator 7008, and/or the inverse lifter 7009. The color inverse transform processor 9010 according to the embodiments performs inverse transform coding to inversely transform color values (or textures) included in the decoded attributes. The color inverse transform processor 9010 performs an operation and/or inverse transform coding the same as or similar to the operation and/or inverse transform coding of the color inverse transformer 7010. The renderer 9011 according to the embodiments may render the point cloud data.

FIG. 10 illustrates an exemplary structure operable in connection with point cloud data transmission/reception methods/devices according to embodiments.

The structure of FIG. 10 represents a configuration in which at least one of a server 1060, a robot 1010, a self-driving vehicle 1020, an XR device 1030, a smartphone 1040, a home appliance 1050, and/or a head-mount display (HMD) 1070 is connected to the cloud network 1000. The robot 1010, the self-driving vehicle 1020, the XR device 1030, the smartphone 1040, or the home appliance 1050 is called a device. Further, the XR device 1030 may correspond to a point cloud data (PCC) device according to embodiments or may be operatively connected to the PCC device.

The cloud network 1000 may represent a network that constitutes part of the cloud computing infrastructure or is present in the cloud computing infrastructure. Here, the cloud network 1000 may be configured using a 3G network, 4G or Long Term Evolution (LTE) network, or a 5G network.

The server 1060 may be connected to at least one of the robot 1010, the self-driving vehicle 1020, the XR device 1030, the smartphone 1040, the home appliance 1050, and/or the HMD 1070 over the cloud network 1000 and may assist in at least a part of the processing of the connected devices 1010 to 1070.

The HMD 1070 represents one of the implementation types of the XR device and/or the PCC device according to the embodiments. The HMD type device according to the embodiments includes a communication unit, a control unit, a memory, an I/O unit, a sensor unit, and a power supply unit.

Hereinafter, various embodiments of the devices 1010 to 1050 to which the above-described technology is applied will be described. The devices 1010 to 1050 illustrated in FIG. 10 may be operatively connected/coupled to a point cloud data transmission device and reception device according to the above-described embodiments.

<PCC+XR>

The XR/PCC device 1030 may employ PCC technology and/or XR (AR+VR) technology, and may be implemented as an HMD, a head-up display (HUD) provided in a vehicle, a television, a mobile phone, a smartphone, a computer, a wearable device, a home appliance, a digital signage, a vehicle, a stationary robot, or a mobile robot.

The XR/PCC device 1030 may analyze 3D point cloud data or image data acquired through various sensors or from an external device and generate position data and attribute data about 3D points. Thereby, the XR/PCC device 1030 may acquire information about the surrounding space or a real object, and render and output an XR object. For example, the XR/PCC device 1030 may match an XR object including auxiliary information about a recognized object with the recognized object and output the matched XR object.

<PCC+XR+Mobile phone>

The XR/PCC device 1030 may be implemented as a mobile phone 1040 by applying PCC technology.

The mobile phone 1040 may decode and display point cloud content based on the PCC technology.

<PCC+Self-driving+XR>

The self-driving vehicle 1020 may be implemented as a mobile robot, a vehicle, an unmanned aerial vehicle, or the like by applying the PCC technology and the XR technology.

The self-driving vehicle 1020 to which the XR/PCC technology is applied may represent a self-driving vehicle provided with means for providing an XR image, or a self-driving vehicle that is a target of control/interaction in the XR image. In particular, the self-driving vehicle 1020 which is a target of control/interaction in the XR image may be distinguished from the XR device 1030 and may be operatively connected thereto.

The self-driving vehicle 1020 having means for providing an XR/PCC image may acquire sensor information from sensors including a camera, and output the generated XR/PCC image based on the acquired sensor information. For example, the self-driving vehicle 1020 may have an HUD and output an XR/PCC image thereto, thereby providing an occupant with an XR/PCC object corresponding to a real object or an object present on the screen.

When the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap an object on the screen. For example, the self-driving vehicle 1220 may output XR/PCC objects corresponding to objects such as a road, another vehicle, a traffic light, a traffic sign, a two-wheeled vehicle, a pedestrian, and a building.

The virtual reality (VR) technology, the augmented reality (AR) technology, the mixed reality (MR) technology and/or the point cloud compression (PCC) technology according to the embodiments are applicable to various devices.

In other words, the VR technology is a display technology that provides only CG images of real-world objects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, an example of MR technology applications is a hologram service.

Recently, the VR, AR, and MR technologies are sometimes referred to as extended reality (XR) technology rather than being clearly distinguished from each other. Accordingly, embodiments of the present disclosure are applicable to any of the VR, AR, MR, and XR technologies. The encoding/decoding based on PCC, V-PCC, and G-PCC techniques is applicable to such technologies.

The PCC method/device according to the embodiments may be applied to a vehicle that provides a self-driving service.

A vehicle that provides the self-driving service is connected to a PCC device for wired/wireless communication.

When the point cloud data (PCC) transmission/reception device according to the embodiments is connected to a vehicle for wired/wireless communication, the device may receive/process content data related to an AR/VR/PCC service, which may be provided together with the self-driving service, and transmit the same to the vehicle. In the case where the PCC transmission/reception device is mounted on a vehicle, the PCC transmission/reception device may receive/process content data related to the AR/VR/PCC service according to a user input signal input through a user interface device and provide the same to the user. The vehicle or the user interface device according to the embodiments may receive a user input signal. The user input signal according to the embodiments may include a signal indicating the self-driving service.

Described herein are a transmission/reception device/method for splitting road data from point cloud data captured by LiDAR equipment and searching for motion.

The transmission/reception device/method according to the embodiments may correspond to the encoder or decoder, transmission device or reception device, encoding method or decoding method, transmission method or reception method described with reference to FIGS. 1, 2, 3, 7, 8, 9, 10, 20, 21, 27, and 28. Further, the transmission/reception device/method according to the embodiments may be a device/method configured by a connection or combination of components described with reference to FIGS. 1, 2, 3, 7, 8, 9, 10, 20, 21, 27, and 28.

The transmission/reception device/method according to the embodiments supports a method of splitting road data based on motion and searching for road motion to efficiently support inter-prediction of point cloud content in geometry-based point cloud compression (G-PCC).

The transmission/reception device/method according to the embodiments may configure a prediction unit (PU) for the road data. Further, the transmission/reception device/method may search for motion of the separated road data and signal related information.

The G-PCC decoding operation of the reception device/method according to embodiments includes receiving an encoded slice-level geometry bitstream and attribute bitstream, decoding geometry, and decoding attribute information based on the geometry reconstructed through the decoding.

The transmission device/method according to the embodiments may use an octree-based, predictive tree-based, or trisoup-based compression technique to compress the geometry information.

An octree according to embodiments may represent a tree based on occupancy information. The occtree may be referred to as an occupancy tree.

The transmission/reception device/method according to the embodiments may separate a separated road based on motion, and search for the motion of the road in order to increase compression efficiency through inter-prediction of content (or point cloud data) captured by LiDAR equipment on a moving vehicle.

FIG. 11 illustrates point cloud data captured by LiDAR.

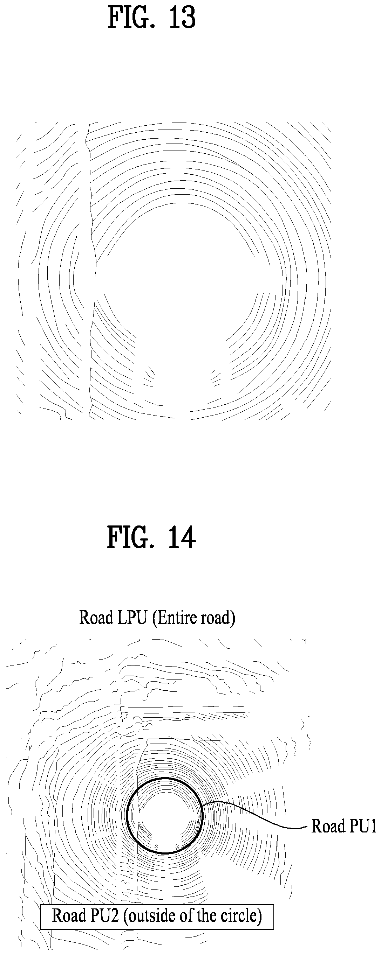

FIGS. 12 and 13 illustrate point cloud data about a road according to embodiments.

Referring to FIG. 11, the point cloud data captured by LiDAR may include both road data and object data. The road data may represent point data recognized by the LiDAR sensor due to laser reflections from the ground, and the object data may represent point data recognized by a LiDAR sensor due to laser reflections from objects (e.g., people, buildings, street trees, etc.).

Since the point cloud points of the captured roads and object may have different characteristics between consecutive point cloud frames, inter-prediction may be performed separately for the road only.

In this regard, the inter-prediction is a prediction technique for predicting point cloud data contained in a current frame by referencing the point cloud data contained in other frames, and may be referred to as "inter-frame prediction" or "inter-screen prediction." The point cloud data according to the embodiments may include multiple frames of point cloud data. The multiple frames may be grouped into a group of frames (GOF). The frames may be categorized into P-frames or I-frames depending on whether they are encoded/decoded with reference to other frames. The P-frames represent frames that are encoded/decoded by referencing other frames.

Referring to FIGS. 12 and 13, point cloud data from which road data is separated is exemplified.

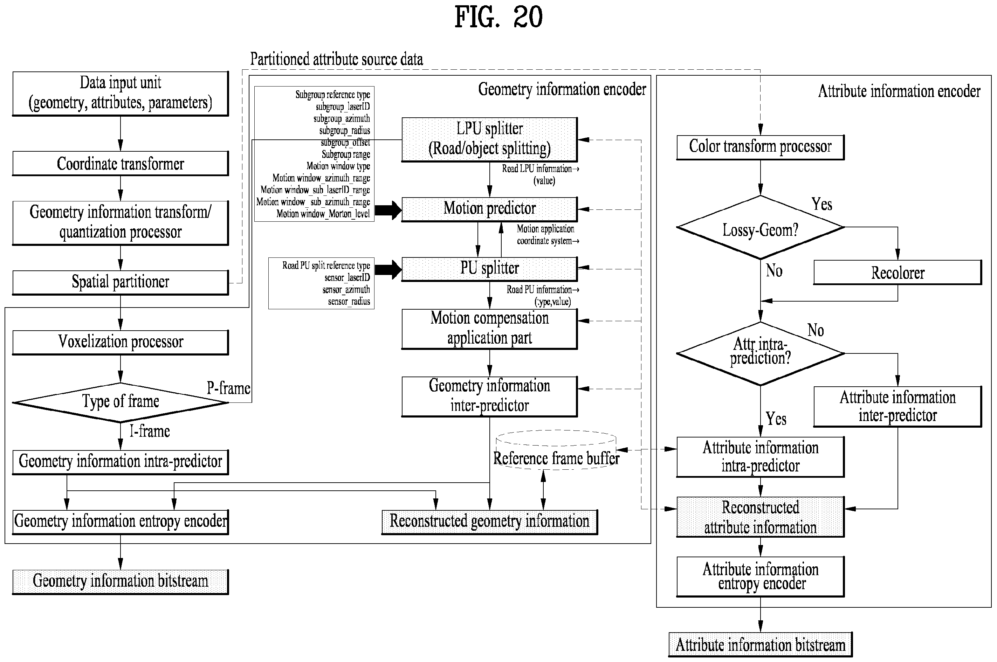

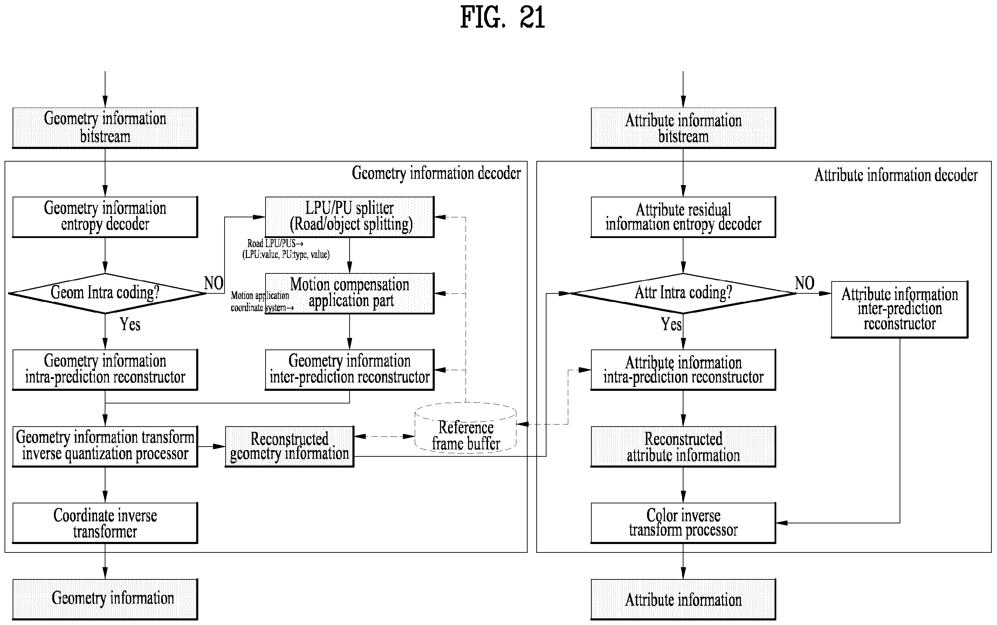

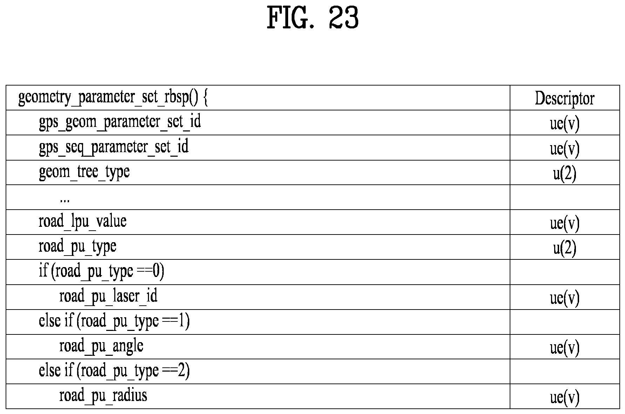

FIGS. 12 and 13 illustrate point cloud data generated by a LiDAR system capturing lasers reflected from a road or ground surface. The shape point cloud data illustrated in FIGS. 12 and 13 is similar to multiple circles of different radii centered on the location of the LiDAR. The transmission/reception device according to the embodiments may separate road data from the point cloud data. For example, the road/object splitter of FIG. 20 or 21 separates the road data from the point cloud data. In other words, it separates the object data from the road data in the point cloud data. This operation may be performed based on a threshold. In this case, the threshold may be delivered as road_lpu_value in FIG. 23.

A road captured by the LiDAR equipment may have a constant relative height from the capture equipment. In this case, points may be generated in such a way that a circle is drawn around a center point representing the position of the LiDAR equipment (sensor), as shown in FIG. 13. In other words, the road points may be acquired by the LiDAR equipment in a form similar to a circle centered on a point.

In the case where the consecutive point cloud frames captured by the LiDAR equipment of a moving vehicle contain only the road without any objects, and the relative height of the road from the center position of the sensor is constant, the point cloud data about the road is always captured in the form shown in FIG. 13. Therefore, it may be difficult to recognize the motion exhibited by the road points between consecutive frames, and applying the motion generated from the objects to the road may be meaningless or even counterproductive, increasing the bitstream size and reducing the compression efficiency. However, as shown in FIG. 12, there are objects on the road. Therefore, the road points acquired may not always have a circular shape because the shape of the road may be affected by the objects. Therefore, there is a need to detect motion from the separated road data and to apply the motion detected from the separated road data to the road data.

The transmission/reception device/method according to the embodiments may carry out a method of splitting a separated road into prediction units (PUs) based on motion, and searching for road data motion to effectively support compression through efficient inter-prediction of content captured by LiDAR equipment on a moving vehicle.

The motion search in the road data according to embodiments may be performed by the geometry encoder of the PCC encoder, and may be applied to the road through the geometry decoding operation of the PCC decoder for a reconstruction operation. A transmission device according to embodiments may correspond to the PCC encoder, and a reception device according to embodiments may correspond to the PPC decoder.

Motion search in the road data according to the embodiments may be performed by the transmission device/-method according to the embodiments. The transmission/reception device/method according to the embodiments may correspond to the encoder or decoder, the transmission or reception device, the encoding or decoding method, and the transmission or reception method described with reference to FIGS. 1, 2, 3, 7, 8, 9, 10, 20, 21, 27, and 28. Further, the transmission/reception device/method according to the embodiments may be a device/method configured by a connection or combination of components described with reference to FIGS. 1, 2, 3, 7, 8, 9, 10, 20, 21, 27, and 28.

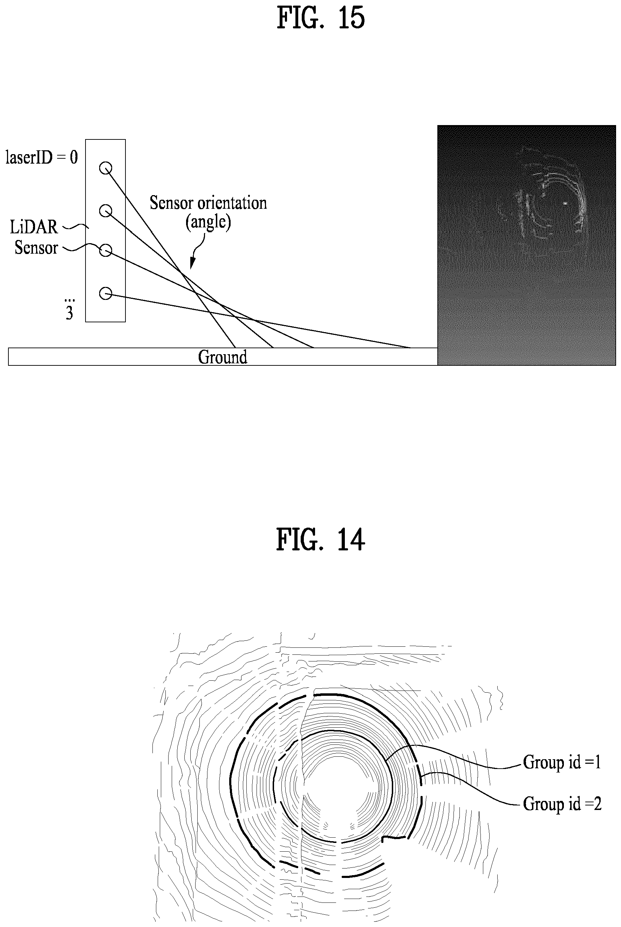

FIG. 14 illustrates point cloud data about a road according to embodiments.

Referring to FIG. 14, the area within the circle represents the area corresponding to PU1 and the area outside the circle represents the area corresponding to PU2. The road Largest Processing Unit (LPU) may represent road data configured by separating only the points marked on the road from the entire point cloud data that includes points for objects. The road data according to the embodiments may be data representing points in the point cloud data that are reflections from the road (or ground).

The splitting of the road data and object data according to the embodiments may be performed by the LPU splitter described in FIG. 20 or 21. The LPU splitter may be referred to as a "road/object splitter." Alternatively, it may be referred to as a road data generator/extractor, or any other term that may convey a similar meaning.

The transmission/reception device/method according to the embodiments may split the road data based on a prediction unit (PU). The PU splitting according to the embodiments may be performed by the PU splitter of FIG. 20. APU represents a prediction unit. The prediction unit may represent a unit space in which a prediction is performed. Unit may be replaced by any other term that may represent an area, such as a box, a region, or a zone.

Referring to FIG. 14, for content captured by LiDAR equipment on a moving vehicle, a portion of the vehicle may be captured by the sensors depending on where the LiDAR equipment is installed. As a result, the LiDAR may be obscured by a portion of the moving vehicle where the LiDAR is installed, causing the actual road not to be captured and leaving certain areas with missing points. That is, the road may not be captured in a specific area such as the circled area in FIG. 14. This issue may be caused by the laser being reflected by a portion of the vehicle where the LiDAR is intalled. Since this area neither moves nor changes, it may generate false information that there is no motion on the road when searching for motion on the road. Therefore, in order to exclude this area and search for the motion of the road, points within a certain radius with the center of the LiDAR equipment set as the origin (0,0,0) may be excluded from the motion search range.

In other words, the transmission/reception device/method according to the embodiments may separate the road data from the point cloud data and exclude a specific region of the road data from the motion search range when searching for motion of the road. Thus, in FIG. 14, the motion of the road data may be searched for based on the point cloud data belonging to PU2, excluding the area corresponding to PU1. Here, PU1 and PU2 may be referred to as a first region or a second region. Alternatively, they may be referred to as a first unit or a second unit. Areas with little change from frame to frame may be excluded from the motion search.

According to embodiments, the range of motion search may be set with a starting laserID, radius, or angle of the laser sensor. Alternatively, the missing laserID corresponding to the area of the circle in FIG. 14 may be found, and the maximum missing laserID+1 may be set as the road motion search range. For example, when there is a portion of the road that is not captured by laser sensors with laserID equal to 1, 2, 3, and 4, the range may be set such that the motion search is performed on road data acquired from laser sensors having laserID greater than or equal to 5.

When the radius captured by the laserID is less than the minimum radius, the start range for motion search on the road may be set to the maximum value of the ID. Alternatively, the radius or sensor angle may be calculated and applied based on the corresponding laserID. For example, when the radius of a point acquired from a laser sensor is smaller than a minimum radius, the maximum radius acquired from the laser sensor may be set as the start range for motion search on the road. The radius may represent the distance from the center of the point cloud data to the point in the road data. The center of the point cloud data may represent the location of the LiDAR.

In other words, the transmission/reception device/method according to the embodiments may set the motion search area based on the laserID, the radius, or the angle of the sensor. Alternatively, the motion search area may be set based on a combination of two or more criteria. The laserID is an identifier assigned to a laser sensor. In setting the motion search area, the radius of the point cloud data acquired from a laser sensor with a laserID, the angle of the laser sensor to the horizontal line, and the like may be considered.

A road LPU (Large Processing Unit) may be divided into road PUs. One road PU may be determined as a start range of the road motion search, and road motion may not be applied to the PU. For other roads, another road PU may be set and road motion may be applied to the PU.

By separating the road PUs into motion-affected and motion-unaffected parts, the noisy point cloud in the center may not need to be controlled.

FIG. 15 illustrates point cloud data about a road captured by LiDAR.

The transmission device/method according to embodiments may perform sampling based on laser ID.

Referring to FIG. 15, LiDAR may include multiple laser sensors. Each sensor has a laserId. Also, each sensor has information about a height, angle, and rotation speed with respect to a sensor center position. For a larger angle of a sensor, a larger radius of the road data may be captured. When a sensor has the smallest angle, it may be placed at the top of the LiDAR equipment and may capture a road point having the smallest radius.

Referring to FIG. 15, a laser sensor with a laserID equal to 0 is placed at the top of the LiDAR equipment, and laser sensors with higher laserIDs are placed at lower positions. Furthermore, the orientation (or angle) of the laser sensors is set such that a laser sensor with a lower laserID (at a higher position on the LiDAR) faces the ground closer to the LiDAR. The angle of the laser sensor becomes more negative as it faces the ground closer to the LiDAR, and more positive and closer to a line parallel to the ground, which is at 0 degrees, as it faces the ground farther away from the LiDAR. Therefore, as the value of the laserID decreases, the angle of the laser sensor decreases.

Therefore, when the sensors are sorted in ascending order of angle, and only points captured by specific sensors are sampled, a cluster of points with similar radii may be sampled. FIG. 16 shows an example of this operation.

FIG. 16 illustrates grouping of point cloud data having similar radii.

The transmission/reception device/method according to the embodiments may group or sample road data. The grouping or sampling according to the embodiments may be performed based on a laserID, a radius of the road data, an angle of the laser sensor, or the like. Additionally, an offset and the number of consecutive samples (range/size) for sampling may be set.

Referring to FIG. 16, points of the road with similar radii may be grouped or sampled. That is, points with a group ID equal to 1 may be grouped, points with a group ID equal to 2 may be grouped, and the grouped points may be sampled.

Prior to generating a window for motion search in road data according to embodiments, road points may be sampled for fast performance, and the degree of sampling may be adjusted depending on the use-case.

Sampling may be set based on the laserID, radius, or sensor angle (angle to the ground). The difference value (offset) and the number of consecutive samples (range/size) may be set for sampling.

For example, the sensors may be arranged in ascending order of angle, and the sensors may be assigned laserID starting from 0 with an increment of 1 in order. In this case, the motion search range may start at laserID=7, and sampling may be performed at intervals of 5. Further, when grouped into three units, a first group may include data acquired by sensors with laserIDs from 12 to 15.

The transmission and reception devices according to the embodiments may exclude a specific area from the motion search by setting PUs as described with reference to FIG. 14. Additionally, the motion search may be performed by grouping or sampling road data based on laserID, radius (distance from the LiDAR location), or sensor angle, as described with reference to FIG. 15 or 16. Alternatively, the motion search may be performed by grouping or sampling road data based on two or more criteria. The grouping or sampling according to the embodiments may be performed by the "motion predictor" of FIG. 20.

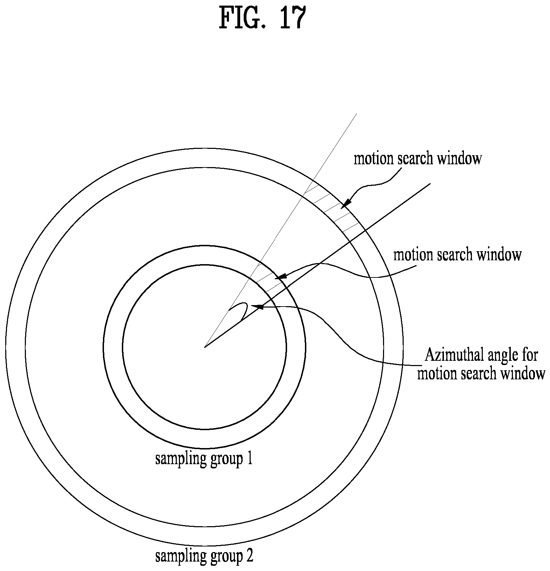

FIGS. 17, 18, and 19 illustrate setting a window for motion search in point cloud data according to embodiments.

The transmission/reception device/method according to the embodiments may generate a motion search window to search for road motion based on grouped or sampled points. The motion search window may be set based on the azimuthal angles of points in the same sampling group.

For example, points in the same sampling group that have azimuths ranging from 0 to 10 degrees may be set as one motion search window. FIG. 17 illustrates an example of setting a motion search window.

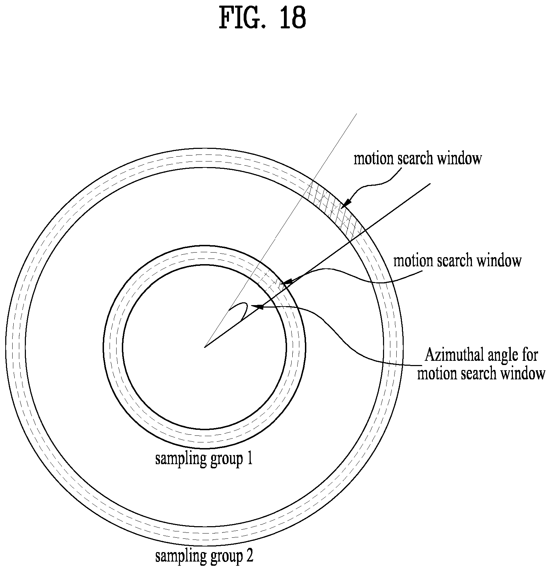

Motion search may be performed using the motion search window of FIG. 17 as it is, and the points belonging to the region of the motion search window may be further split based on laserID or azimuth as shown in FIG. 18, and each region may be set as a motion search window.

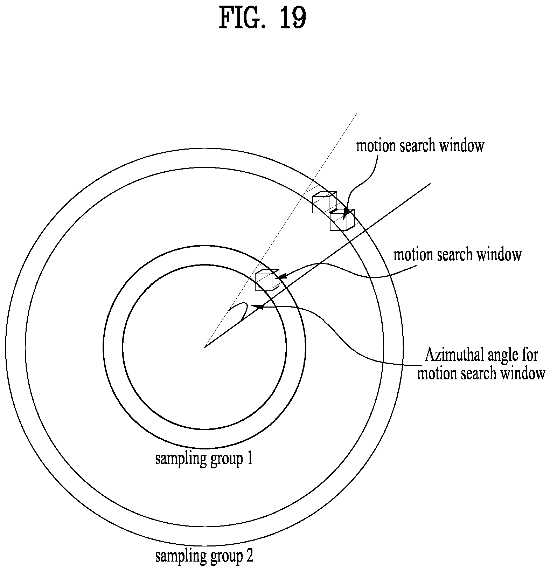

Alternatively, the motion search window may be set by sorting the points belonging to a region in Morton order and separating the same into cubic regions, as shown in FIG. 19.

The transmission/reception device/method according to the embodiments may generate a window for motion search for the grouped or sampled road points. The motion search window region may be set based on an azimuth angle, a laserID, or the like. The motion search window region may be set based on two or more criteria. Furthermore, the points within the set window region may be sorted in Morton order, and then the region may be split into cubic regions to generate finer motion search windows.

The transmission/reception device/method according to the embodiments may use the motion search window to search for and apply motion in road data.

The transmission/reception device/method according to the embodiments may search for motion of the road data by comparing the motion search window of a reference frame with point cloud data belonging to the motion search window of the current frame.

The motion may be searched for based on the azimuth and radius in a spherical or cylindrical coordinate system, or may be searched for based on a Cartesian coordinate system. The rate-distortion optimization (RDO) cost given when the motion is applied and when the motion is not applied may be calculated. When it is efficient to apply the motion, the found road motion may be transmitted to the decoder as the motion of a road PU, and the decoder may apply the road motion to the points corresponding to the road PU. A flag indicating whether the motion of the PU is based on a spherical or cylindrical coordinate system or a Cartesian coordinate system may be transmitted to the decoder. Further, the road motion may be applied to static or dynamic objects.

In searching for motion based on the spherical or cylindrical coordinate system, 2D or 3D motion search may be performed. Motion searched for based on the 3D parameters except for laserID may be 2D motion.

The generation/setting of the motion search window and motion prediction according to the embodiments may be performed by the motion predictor of FIG. 20. In the reception device according to the embodiments, the "motion compensation application part" of FIG. 21 may receive signal information (motion application coordinate system, motion, etc.) and apply motion.

FIG. 20 illustrates a point cloud data transmission device/method according to embodiments.

The transmission/reception device/method according to the embodiments may correspond to the encoder or decoder, the transmission or reception device, the encoding or decoding method, and the transmission or reception method described with reference to FIGS. 1, 2, 3, 7, 8, 9, 10, 20, 21, 27, and 28. Further, the transmission/reception device/method according to the embodiments may be a device/method configured by a connection or combination of components described with reference to FIGS. 1, 2, 3, 7, 8, 9, 10, 20, 21, 27, and 28.

FIG. 20 is a block diagram of a PCC data encoder (or point cloud data transmitter). Each component may correspond to hardware, software, a processor, and/or a combination thereof. PCC data (point cloud data) may be input to the encoder, encoded, and output as a geometry information bitstream and an attribute information bitstream.

Referring to FIG. 20, when the type of the frame is a P-frame, the geometry information encoder may split the road/object into a road LPU and an object LPU through an LPU splitter, predict the global motion through a motion predictor, further split a region that needs to be split through a PU splitter, and predict the local motion through the motion predictor. This process may continue until no more splits are needed or up to a specified level. Whether to perform LPU/PU splitting and the predicted motion for each LPU/PU may be signaled to the decoder (or reception device).

The motion compensation application part may determine, through RDO, whether to apply the predicted motion to the generated LPUs/PUs, and may apply the motion to the reference frame based on the determination. Whether to apply the motion may be signaled to the decoder.

With the compensated points, the geometry information may be compressed and signaled by the geometry information inter-predictor.

The LPU splitter (or road/object data splitter) according to the embodiments may receive whether to split roads and objects as an input. When the input value is TRUE, it may split the point cloud data into road data (or road points) and object data (or object points).

The road/object data splitter according to the embodiments may generate LPUs for the classified points and signal to the decoder (reception device) whether each LPU is a road or an object group. Alternatively, a reference value for the road LPU may be signaled to the decoder (reception device) and split by the decoder (reception device).

The PU splitter according to the embodiments may configure a road LPU including two road PUs, which may be split into a PU for a region where there is no change, and a PU for a region where GM is present. The reference types used to split the road PUs may include laser_ID_type, angle, and radius, and a value for each type may be input. The PU splitter may split the road data based on the input values and the reference types, and may signal information related to the split road PUs to the decoder (reception device), and the decoder (reception device) may configure the road PUs based on the received values.

The PU splitter in the transmission device according to the embodiments may separate a region based on the laserID of the laser sensor, the angle, and/or the radius (distance from the center point) of the road data. For example, a first region may be PU1 and a second region may be PU2. Signaling information related the separation of the region may be transmitted to the reception device according to the embodiments, and the reception device may configure the first region and the second region based on the received signaling information.

The motion predictor according to the embodiments may divide the subgroups to predict the motion of the road PU. The subgroup reference types may include laserID, azimuth, and radius. An offset between the subgroups and the range (size) of the subgroups may be input, and the subgroups may be configured based on the input reference.

The motion predictor according to the embodiments may generate subgroups and generate motion search windows within the subgroups. The reference types for generation of motion windows may include use of azimuth only, use of azimuth and azimuth for internal splitting, use of azimuth, azimuth for internal splitting, and radius, and use of Morton code. For each type, azimuth, sub_azimuth, sub_radius, and Morton_level may be input, and motion windows may be generated on a subgroup basis according to the input values.

The motion predictor of the transmission device according to the embodiments may generate a group for any PU (or region) and set a motion search window within the group. Groups may be established based on a laserID of the laser, an azimuth value, and/or a radius value. Groups may be set based on two or more criteria. A group may also be configured based on an input offset and range for the group. Then, a motion search window may be set within the group. The motion search window may be set based on an azimuth value. The motion search window may be set by splitting a region set as the azimuth range based on the azimuth and/or radius. When a Morton code is used, a first azimuth range, a second azimuth range, a radius range, and/or a Morton level may be input and the motion window may be set based on the corresponding group criteria.

The generation of the groups or subgroups described above may correspond to the grouping/sampling of FIG. 16.

Once the motion search windows according to the embodiments are generated, the motion of the road PU may be predicted by measuring the change between the motion search windows. The motion may be searched for based on a Cartesian coordinate system or a spherical/cylindrical coordinate system. The motion predictor may search for the motion based a suitable criterion and signal the motion application coordinate system to the decoder (reception device), and the decoder (reception device) may apply the motion according to the coordinate system.

FIG. 21 illustrates a point cloud data reception device/method according to embodiments

The transmission/reception device/method according to the embodiments may correspond to the encoder or decoder, the transmission or reception device, the encoding or decoding method, and the transmission or reception method described with reference to FIGS. 1, 2, 3, 7, 8, 9, 10, 20, 21, 27, and 28. Further, the transmission/reception device/method according to the embodiments may be a device/method configured by a connection or combination of components described with reference to FIGS. 1, 2, 3, 7, 8, 9, 10, 20, 21, 27, and 28.

FIG. 21 is a block diagram illustrating a PCC data decoder. Each component may correspond to hardware, software, a processor, and/or a combination thereof.

An encoded geometry information bitstream and attribute information bitstream may be input to the decoder (or reception device), and decoded and reconstructed PCC data may be output.

Referring to FIG. 21, the LPU/PU splitter according to the embodiments may receive signaling information related to the LPUs/PUs of the road (including laser_ID_type, azimuth_type, and radius as reference types, and values for the types), and may configure a road LPU and PUs.

The LPU/PU splitter (or road/object splitter) of the reception device according to the embodiments may divide the point cloud data into object data and road data (or road LPU) based on the related signaling information, and configure PUs (or regions) in the road data. Further, the motion compensation application part may apply motion to the PUs (or regions) of the road data based on the motion information and the coordinate system information. Alternatively, the motion compensation application part may apply motion to a motion search window configured by the transmission device. In other words, the reception device according to the embodiments may apply motion to a specific region of the road data based on the received signaling information. Here, the specific region may correspond to a PU, the motion search window, or a grouped or sampled region.

The motion compensation application part according to the embodiments may receive a signal motion application coordinate system and motion, and apply motion to the road PU according to the motion application coordinate system.

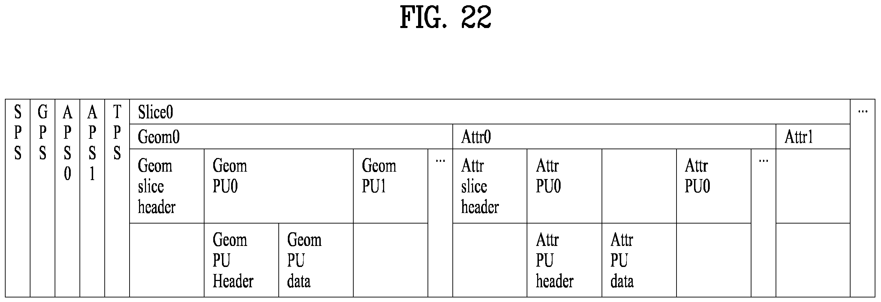

FIG. 22 illustrates a structure of a bitstream according to embodiments.

A bitstream according to embodiments may contain information related to splitting, sampling, or grouping of the road data, setting of road PUs, generation of a motion search window, and motion search/application according to embodiments.

The related information may be signaled in order to add/carry out embodiments. The signaling information according to the embodiments may be used at the transmitting side or the receiving side.

A configuration of an encoded point cloud is shown in FIG. 22. A point cloud data encoder configured to perform geometry encoding and/or attribute encoding may generate an encoded point cloud (or a bitstream containing a point cloud) as follows. In addition, signaling information related to the point cloud data may be generated and processed by the metadata processor of the point cloud data transmission device and included in the point cloud as follows.

Each abbreviation has the following meaning. Each abbreviation may be referred to by another term within the scope of the equivalent meaning.

SPS: Sequence Parameter Set
GPS: Geometry Parameter Set
APS: Attribute Parameter Set
TPS: Tile Parameter Set Geom: Geometry bitstream = geometry slice header+ [geometry PU header + geometry PU data] | geometry slice data Attr: Attribute bitstream = attribute data unit header + [attribute PU header + attribute PU data] | attribute data unit data

Road LPU/PU/motion information may be added to the GPS or the TPS and signaled.

The road LPU/PU/motion information may be added to the geometry data header for each slice and signaled.

The point cloud data transmission/reception device/method according to the embodiments provides tiles or slices to divide the point cloud into regions for processing. When the point cloud is divided into regions, an option to generate different neighbor point sets for the respective regions may be configured to provide a selection method exhibiting low complexity and low reliability of results or a selection method exhibiting high complexity and high reliability. The option may be configured differently according to the capacity of the receiver.

Therefore, when the point cloud is divided into tiles, a different option may be applied to each tile. When the point cloud is divided into slices, a different option may be applied to each slice.

In embodiments, a slice may correspond to a data unit, and a slice header may correspond to a data unit header.

A geometry PU, a geometry PU header, and geometry PU data may be added to a bitstream according to embodiments.

FIG. 23 illustrates a syntax of a geometry parameter set according to embodiments.

LPU, PU, grouping/sampling, motion search window, and/or motion information related to the road data may be added to the geometry parameter set to be signaled in the encoding/decoding process of geometry information according to embodiments. The signaling information may efficiently support inter-prediction of the geometry information. The term signaling information may be replaced by other terms within the scope of the meaning and function of the information being delivered.

gps_geom_parameter_set_id indicates an identifier for the GPS to be referenced by other syntax elements. The value of gps_seq_parameter_set_id may be in the range of 0 to 15.

gps_seq_parameter_set_id may specify the value of sps_seq_parameter_set_id for the active SPS. The value of gps_seq_parameter_set_id may be in the range of 0 to 15.

geom_tree_type: geom_tree_type equal to 0 may indicate that the position information is coded using an octree. geom_tree_type equal to 1 may indicate that position information is coded using a predictive tree. The octree may represent a tree based on occupancy information.

road_lpu_value: May indicate a threshold for splitting road data and object data applied to the point cloud frame into LPUs.

road_pu_type: May indicate the type for PU splitting of road data applied to the point cloud frame.

0= Based on the laserID value
1= Based on the angle of the laser sensor
2= Based on the radius value

road_pu_laser_id: Indicates the laserID used during road PU splitting applied to the point cloud frame.

road_pu_angle: Indicates the sensor angle (angle toward the ground) used during road PU splitting applied to the point cloud frame.

road_pu_radius: Indicates the radius value used for road PU splitting applied to the point cloud frame.

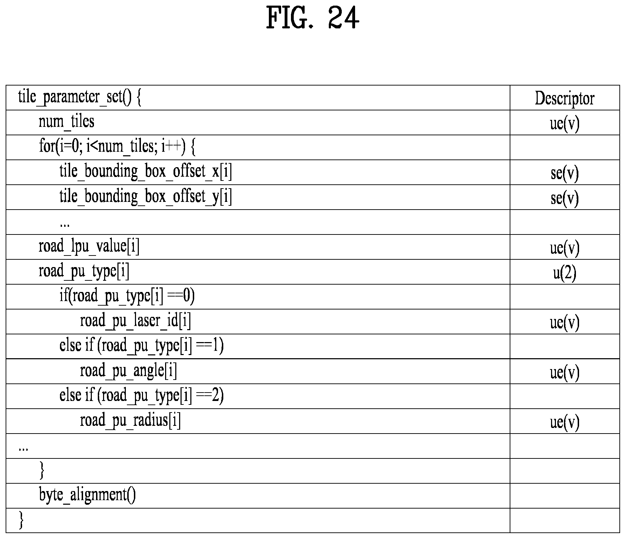

FIG. 24 illustrates a syntax of a tile parameter set according to embodiments.

LPU, PU, grouping/sampling, motion search window, and/or motion information related to the road data may be added to the tile parameter set to be signaled in the encoding/decoding process of geometry information according to embodiments. The signaling information may efficiently support inter-prediction of the geometry information. The term signaling information may be replaced by other terms within the scope of the meaning and function of the information being delivered.

num_tiles indicates the number of tiles signaled for the bitstream. When not present, num_tiles may be inferred to be 0.

tile_bounding_box_offset_x[ i ] indicates the x offset of the i-th tile in Cartesian coordinates. When not present, the value of tile_bounding_box_offset_x[ 0 ] may be inferred to be sps_bounding_box_offset_x.

tile_bounding_box_offset_y[ i ] indicates the y offset of the i-th tile in Cartesian coordinates. When not present, the value of tile_bounding_box_offset_y[0] may be inferred to be sps_bounding_box_offset_y.

road_lpu_value: May indicate a threshold for splitting road data and object data applied to the tile into LPUs.

road_pu_type: May indicate the type for PU splitting of road data applied to the tile.

    0= Based on the laserID value
    1= Based on the angle of the laser sensor
    2= Based on the radius value

road_pu_laser_id: Indicates the laserID used during road PU splitting applied to the tile.

road_pu_angle: Indicates the sensor angle (angle toward the ground) used when splitting road PUs applied to the tile.

road_pu_radius: Indicates the radius used when splitting road PUs applied to the tile.

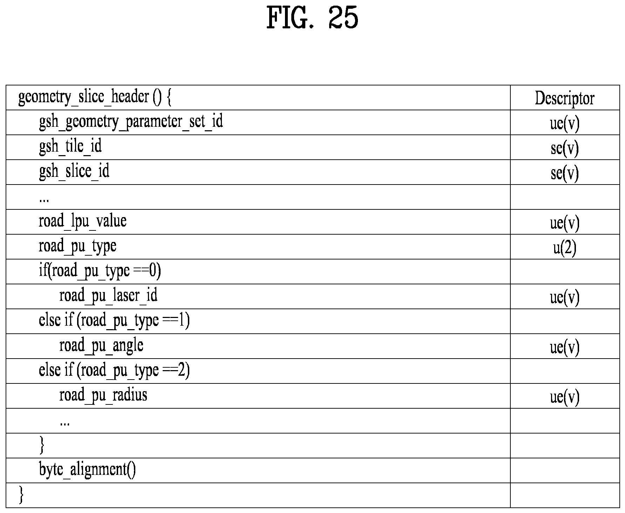

FIG. 25 is an example syntax of a geometry data header according to embodiments.

LPU, PU, grouping/sampling, motion search window, and/or motion information related to the road data may be added to the geometry data header to be signaled in the encoding/decoding process of geometry information according to embodiments. The signaling information may efficiently support inter-prediction of the geometry information. The term signaling information may be replaced by other terms within the scope of the meaning and function of the information being delivered.

gsh_geometry_parameter_set_id specifies the value of the gps_geom_parameter_set_id of the active GPS.

gsh_tile_id specifies the value of the tile ID referenced by GSH. The value of gsh_tile_id shall be in the range of 0 to XX.

gsh_slice_id identifies the slice header to be referenced by other syntax elements. The value of gsh_slice_id shall be in the range of 0 to XX.

road_lpu_value: May indicate a threshold for splitting road data and object data applied to the slice into LPUs.

road_pu_type: May indicate the type for PU splitting of road data applied to the slice.

    0= Based on the laserID value
    1= Based on the angle of the laser sensor
    2= Based on the radius value

road_pu_laser_id: Indicates the laserID used during road PU splitting applied to the slice.

road_pu_angle: Indicates the sensor angle (angle toward the ground) used when splitting road PUs applied to the slice.

road_pu_radius: Indicates the radius used when splitting the road PU applied to the slice.

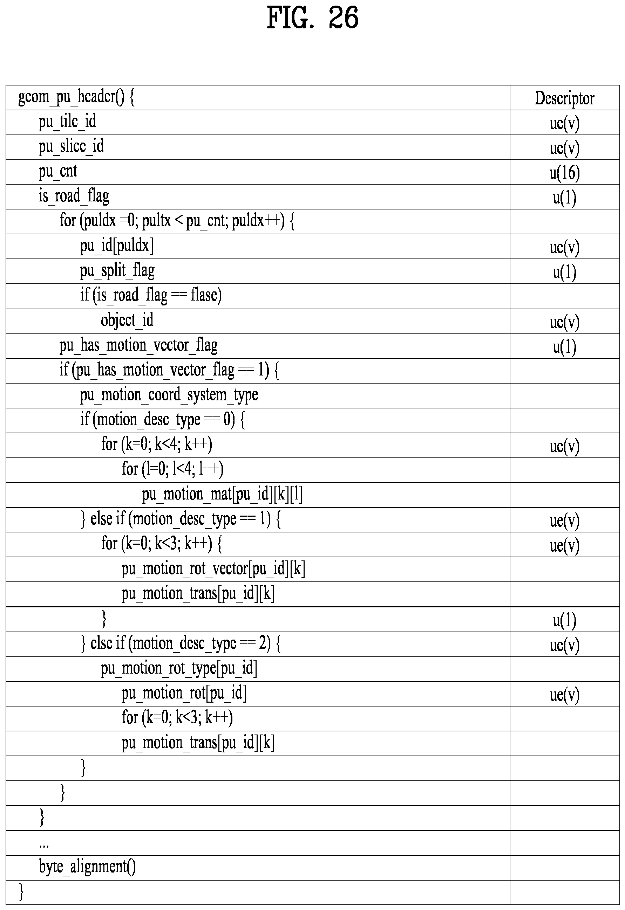

FIG. 26 illustrates a syntax of a geometry PU header according to embodiments.

In the encoding/decoding process of geometry information according to embodiments, a Geom PU header may be generated to signal LPU, PU, grouping/sampling, motion search window, and/or motion information related to the road data. The signaling information may efficiently support inter-prediction of the geometry information. The term signaling information may be replaced by other terms within the scope of the meaning and function of the information being delivered.

pu_tile_id indicates the tile ID to which the PU belongs.

pu_slice_id indicates the slice ID to which the PU belongs.

pu_cnt indicates the number of PUs in the slice.

pu_id indicates the ID of the PU.

pu_split_flag indicates whether the PU block has been subsequently split further.

pu_has_motion_vector_flag indicates whether the PU block has a motion vector.

pu_motion_coord_system_type indicates the type of the coordinate system applied to the motion of the PU block.

    : 0= Cartesian coordinate system
    : 1= Spherical coordinate system
    : 2= Cylindrical coordinate system

pu_motion_mat[][][] indicates the motion matrix applied to the PU block.

pu_motion_rot_vector[] [] indicates the motion rotation vector applied to the PU block.

pu_motion_trans [][] indicates the motion translation vector applied to the PU block.

pu_motion_rot_type[] indicates the type of motion rotation value applied to the PU block.

      : 0= radian

      : 1= degree

pu_motion_rot[] indicates the motion rotation value applied to the PU block. The rotation axis may be rotated about the road normal vector.

is_road_flag indicates whether a point contained in the LPU block is a road/object.

object_id indicates the object id of a point contained in the PU block.

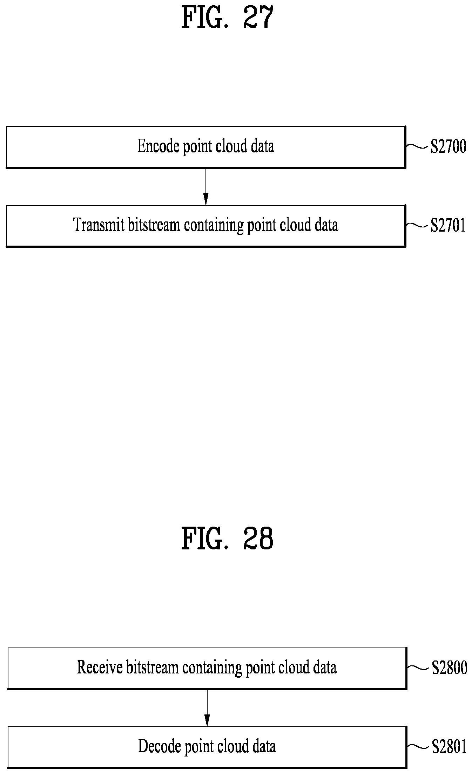

FIG. 27 illustrates a point cloud data transmission method according to embodiments.

Referring to FIG. 27, the point cloud data transmission method according to the embodiments includes encoding point cloud data (S2700) and transmitting a bitstream containing the point cloud data (S2701).

The transmission method of FIG. 27 may correspond to or be combined with the encoding method or transmission method described with reference to FIGS. 1, 2, 3, 8, 10, and 20. The transmission method of FIG. 27 may include the separation of road data, PU setting, grouping or sampling of road data, motion search window setting, and/or motion prediction for the road data described with reference to FIGS. 11 to 19.

Operation S2700 of encoding the point cloud data includes splitting the road data and object data of the point cloud data. The splitting of the road data and object data may be performed by the road/object splitter of FIG. 20. Further, the splitting of the road data and object data included in the point cloud data is described with reference to FIGS. 13 to 15. The splitting of the road data may be performed based on a threshold. For example, road_lpu_value in FIG. 23 may indicate a threshold used to separate the road data from the object data.

Operation S2700 of encoding the point cloud data may further include splitting the road data into a plurality of units based on at least one of an identifier of the sensor, an angle of the sensor, or a distance. In this case, the sensor may represent a laser sensor provided in a LiDAR, and the identifier of the sensor may represent a laserID. The angle of the sensor may indicate an angle at which the sensor emits a laser, and the distance may indicate a distance of a point of the road data from a center of the point cloud data. The distance may represent the distance of the point from the center of the point cloud data. The unit may represent a PU (Prediction Unit) or a region. The step of splitting the road data is illustrated in FIGS. 14 and 15.

The step of encoding the point cloud data (S2700) further includes grouping the road data belonging to the first unit based on at least one of an identifier of the sensor, an angle of the sensor, or a distance. The first unit may be referred to as a first PU or a first region. The first unit may represent a region that is a predetermined distance away from the center of the point cloud data, i.e., the first unit may be a region that includes road data located at a distance greater than a predetermined distance from the center. In this case, the predetermined distance may represent a maximum distance at which the data is interfered with by a portion of a car. Thus, the first unit includes only road data that is not interfered with by a portion of the vehicle.

The identifier of the sensor may represent a laserID. The angle of the sensor may indicate an angle at which the sensor emits a laser, and the distance may indicate a distance of a point in the road data. The distance may represent a distance of the point from a center point where the LiDAR is located. The steps of grouping or sampling are described in FIGS. 16 to 19.

The step of encoding the point cloud data S2700 may further include setting a motion search window for the grouped road data based on at least one of an identifier of the sensor, an azimuth, or a distance. The setting of the motion search window is illustrated in FIGS. 17 through 19.

The step of encoding the point cloud data (S2700) may further include predicting a motion based on the motion search window. Motion prediction according to embodiments is illustrated in FIG. 20. The step of predicting the motion may calculate a rate-distortion optimization (RDO) cost based on whether or not to apply the motion, and may determine whether or not to apply the motion based on the result of the RDO cost calculation.

The bitstream includes information indicating how to split the road data into a plurality of units (road_pu_type, road_pu_laser_id/angle/radius in FIGS. 23 to 26). The bitstream may also include information for sampling or grouping the road data belonging to the units. For example, it may further include laserID, sensor angle, and/or distance reference information for sampling or grouping. The bitstream may further include information for setting a motion search window. For example, it may include laserId, azimuth, and/or radius information to define a motion search window. In addition, it may further include information about the values of variables that are the basis for defining a particular region.

In other words, the step of encoding the point cloud data (S2700) includes the steps of splitting the road data of the point cloud data, splitting the road data into a plurality of units, grouping the road data belonging to the first unit, setting a motion search window for the grouped road data, and predicting the motion based on the motion search window. The operation of each step is described in FIGS. 1 to 19.

The method of transmitting according to embodiments may be performed by a transmission device. The transmission device according to the embodiments may include an encoder for encoding the point cloud data and a transmitter for transmitting the point cloud data. The transmission device according to the embodiments may correspond to the encoder, transmitter, and transmitter described in FIGS. 1, 2, 3, 7, 8, 9, 10, 20, 21, 27, and 28. Further, the transmission device according to the embodiments may be a device formed by a connection or combination of components described in FIGS. 1, 2, 3, 7, 8, 9, 10, 20, 21, 27, and 28.

FIG. 28 illustrates a point cloud data reception method according to embodiments.

Referring to FIG. 28, a transmitting method according to embodiments includes a step S2800 of receiving a bitstream containing point cloud data and a step S2801 of decoding the point cloud data.

The receiving method according to embodiments may correspond to a reverse process of the transmitting method according to embodiments.

The receiving method of FIG. 28 may correspond to or be combined with any of the decoding methods or receiving methods described in FIGS. 1, 2, 7, 9, 10, and 21. The receiving method of FIG. 28 may perform the operations described in FIGS. 11 through 19, including receiving information about separating the road data, setting, grouping, or sampling PUs for the road data, setting a motion search window, and/or predicting motion, and restoring the point cloud data.

The step of decoding the point cloud data (S2801) includes splitting the road data and the object data of the point cloud data. The splitting of the road data and the object data may be performed in the road/object splitter of FIG. 21. Further, splitting road data and object data included in the point cloud data is described in FIGS. 13 through 15. The splitting may be performed by signaling information about splitting the road data and object data (e.g., road_lpu_value of FIG. 23).

The step of decoding the point cloud data (S2801) may further include splitting the road data into a plurality of units based on at least one of an identifier of the sensor, an angle of the sensor, or a distance. In this case, the sensor may represent a laser sensor provided in a LiDAR, and the identifier of the sensor may represent a laserID. The angle of the sensor may indicate an angle at which the sensor emits a laser, and the distance may indicate a distance of the point in the road data. The distance may represent the distance of the point from the center point where the LiDAR is located. The unit may represent a PU or an area. The steps of splitting the road data are illustrated in FIGS. 14 and 15. The reception device may receive information on how to split the units, and may split the road data into a plurality of units accordingly. The units may be referred to as PUs or regions.

The step of decoding the point cloud data (S2801) may further include grouping the road data belonging to the first unit based on at least one of an identifier of the sensor, an angle of the sensor, or a distance. The first unit may represent a first PU or a first region. The first unit may represent a region that is at least a predetermined distance from a center of the point cloud data, i.e., the first unit may be a region that includes road data located at a predetermined distance from the center. In this case, the predetermined distance may represent a maximum distance at which the data is interfered with by a portion of a car. Thus, the first unit includes only road data that is not interfered with by a portion of the vehicle.

The identifier of the sensor may represent a laserID. The angle of the sensor may indicate an angle at which the sensor emits a laser, and the distance may indicate a distance of a point in the road data. The distance may represent a distance of the point from a center point where the LiDAR is located. The step of grouping or sampling is described in FIGS. 16 to 19. The receiving unit may receive information about the grouping or sampling (such as laserID, angle, or distance) and group or sample the road data accordingly.

The bitstream includes motion information for the first unit. The step of decoding the point cloud data (S2801) may apply the motion information to the road data corresponding to the first unit. The reception device may apply motion to the units of the road data based on the received motion information. This operation may be performed in the motion compensation application part of FIG. 21.

The bitstream may further include information indicative of how to split the road data into a plurality of units. The information may be an identifier of a sensor, an angle of the sensor, or a distance criterion.

That is, the step of decoding the point cloud data S2801 includes the steps of splitting the road data of the point cloud data, splitting the road data into a plurality of units, grouping the road data belonging to the first unit, and applying a motion to the grouped road data. The operation of each step is described in FIGS. 1 to 19.

The point cloud data transmission and reception method (PCC encoding method, PCC decoding method, signaling method) according to the above embodiments may provide the following effects.

In the case of capturing and storing frame by frame via LiDAR equipment from a moving vehicle, the scenario may have continuity between frames, which allows for efficient compression using inter-prediction techniques. Since the motion characteristics of the captured road and object point clouds are different, in order to efficiently apply the inter-prediction technique, splitting the road and object and making fast and accurate motion predictions for each may affect the compression time, and increasing the efficiency of the inter-prediction technique through accurate predictions may reduce the bitstream size.

The transmission and reception device/method according to embodiments may provide a means to quickly and accurately predict motion using characteristics of point cloud data captured by LiDAR equipment on a moving vehicle.

To support efficient geometry compression of content captured by LiDAR equipment on a moving vehicle, the transmission device/method according to embodiments may include splitting road data and object data, organizing the separated road LPUs into road PUs based on motion, sampling/grouping to search for motion of the road PUs, setting a motion search window, and applying different motion coordinate systems.

Thus, the transmission/reception device/method may provide a point cloud content stream with improved inter-geometry compression efficiency of an encoder/decoder of Geometry-based Point Cloud Compression (G-PCC) for compressing three-dimensional point cloud data.

In other words, a transmission device/method according to embodiments may efficiently compress point cloud data to transmit data and convey signaling information for doing so, so that a receiving method/device according to embodiments may efficiently decode/restore point cloud data.

The transmission device/method according to the embodiments isolates road data and applies motion to it. Unlike conventionally assumed motion-free road data, the transmission and reception device/method according to embodiments assumes that motion occurs in road data due to portions of the road being obscured by objects. Therefore, by separating the road data and performing motion prediction and motion compensation on the road data, the prediction accuracy may be increased. The prediction accuracy reduces the residual value, thereby reducing the amount of data to be transmitted and received and improving the transmission and reception efficiency.

Furthermore, the transmission and reception device/method according to embodiments may split regions (e.g., PUs) of road data to perform motion prediction by excluding noisy regions. For regions of the road data that are close to the center, the interference from a portion of the car may be constant from frame to frame, which may generate information that there is no motion on the road between frames. However, the transmission and reception device/method may exclude the area within a certain distance from the center and set the remaining area as PU to calculate motion only for that area. Thus, the accuracy of the motion may be increased and the prediction accuracy may be improved.

The embodiments have been described in terms of a method and/or a device, and the description of the method and the description of the device may be applied complementary to each other.

Although the accompanying drawings have been described separately for simplicity, it is possible to design new embodiments by combining the embodiments illustrated in the respective drawings. Designing a recording medium readable by a computer on which programs for executing the above-described embodiments are recorded as needed by those skilled in the art also falls within the scope of the appended claims and their equivalents. The devices and methods according to embodiments may not be limited by the configurations and methods of the embodiments described above. Various modifications can be made to the embodiments by selectively combining all or some of the embodiments. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In the present disclosure, "/" and "," should be interpreted as indicating "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in this specification, the term "or" should be interpreted as indicating "and/or." For instance, the expression "A or B" may mean 1) only A, 2) only B, or 3) both A and B. In other words, the term "or" used in this document should be interpreted as indicating "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signals unless context clearly dictates otherwise.

The terms used to describe the embodiments are used for the purpose of describing specific embodiments, and are not intended to limit the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if" and "when" are not limited to an optional case and are intended to perform the related operation or interpret the related definition according to a specific condition when the specific condition is satisfied.

Operations according to the embodiments described in this specification may be performed by a transmission/-reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or combinations thereof. The firmware, software, and/or combinations thereof may be stored in the processor or the memory.

The operations according to the above-described embodiments may be performed by the transmission device and/or the reception device according to the embodiments. The transmission/reception device may include a transmitter/receiver configured to transmit and receive media data, a memory configured to store instructions (program code, algorithms, flowcharts and/or data) for the processes according to the embodiments, and a processor configured to control the operations of the transmission/reception device.

The processor may be referred to as a controller or the like, and may correspond to, for example, hardware, software, and/or a combination thereof. The operations according to the above-described embodiments may be performed by the processor. In addition, the processor may be implemented as an encoder/decoder for the operations of the above-described embodiments.

[Mode for Disclosure]

As described above, related details have been described in the best mode for carrying out the embodiments.

[Industrial Applicability]

As described above, the embodiments are fully or partially applicable to a point cloud data transmission/reception device and system. Those skilled in the art may change or modify the embodiments in various ways within the scope of the embodiments. Embodiments may include variations/modifications within the scope of the claims and their equivalents.

**Claims**

1. A method of transmitting point cloud data, the method comprising:

   encoding point cloud data; and
   transmitting a bitstream containing the point cloud data.

2. The method of claim 1, wherein the encoding comprises:

   splitting road data from the point cloud data; and
   splitting the road data into a plurality of units; and
   grouping the road data belonging to a first unit of the units; and
   setting a motion search window for the grouped road data; and
   predicting a motion based on the motion search window,
   wherein the splitting of the road data is performed based on a threshold.

3. The method of claim 2, wherein the splitting the road data into the plurality of units comprises:

   splitting the road data based on at least one of an identifier, an angle, or a distance of a sensor,
   wherein the distance is a distance from a center of the point cloud data.

4. The method of claim 3, wherein the grouping of the road data belonging to the first unit comprises:

grouping the road data based on at least one of the identifier, angle, or distance of the sensor,
wherein the first unit is a region at a distance greater than or equal to a predetermined distance from the center of the point cloud data.

5. The method of claim 4, wherein the setting of the motion search window is performed based on at least one of the identifier, an azimuth of the sensor, or the distance.

6. The method of claim 5, wherein the predicting of the motion comprises:
calculating a rate-distortion optimization (RDO) cost based on whether the motion is applied.

7. The method of claim 6, wherein the bitstream contains information indicating a method of splitting the road data into the plurality of units.

8. A device for transmitting point cloud data, comprising:

an encoder configured to encode point cloud data; and
a transmitter configured to transmit the point cloud data.

9. A method of receiving point cloud data, the method comprising:

receiving a bitstream containing point cloud data; and
decoding the point cloud data.

10. The method of claim 9, wherein the decoding comprises,

splitting road data from the point cloud data; and
splitting the road data into a plurality of units; and
grouping the road data belonging to a first unit of the units; and
applying a motion to the grouped road data.

11. The method of claim 10, wherein the splitting the road data into the plurality of units comprises:

splitting the road data based on one of an identifier, an angle, or a distance of a sensor,
wherein the distance is a distance from a center of the point cloud data.

12. The method of claim 11, wherein the grouping of the road data belonging to the first unit comprises:

grouping the road data based on at least one of the identifier, angle, or distance of the sensor,
wherein the first unit is a region at a distance greater than or equal to a predetermined distance from the center of the point cloud data.

13. The method of claim 12, wherein the bitstream contains motion information about the first unit,
wherein the applying the motion comprises:
applying the motion information to road data corresponding to the first unit.

14. The method of claim 13, wherein the bitstream further contains information indicating a method of splitting the road data into the plurality of units.

15. A device for receiving point cloud data, comprising:

a receiver configured to receive point cloud data; and
a decoder configured to decode the point cloud data.

# FIG. 1

FIG. 2

EP 4 496 315 A1

# FIG. 3

positions                                          attributes

30000 — Transform coordinates                      Transform colors — 30006

30001 — Quantize and remove points (voxelize)      Transfer attributes — 30007

30002 — Analyze octree          Reconstruct geometry    — 30008

                                                   RAHT          Gnnerate LOD — 30009

30003 — Analyze surface approximation                            Lifting — 30010

30005 —                                            Quantize coefficients — 30011

30004 — Arithmetic encode                          Arithmetic encode — 30012

geometry bitstream                                 atribute bitstream

# FIG. 4

## FIG. 5

Level of details

# FIG. 6

Original order

P0, P1, P2, P3, P4, P5, P6, P7, P8, P9

LOD-based order

P0, P5, P4, P2  P1, P6, P3  P9, P8, P7

LOD0

LOD1

LOD2

# FIG. 7

geomerty
bitstream

attributes
birsrteam

7000 — Arithmerix decode

7005 — Arithmerix decode

7001 — Synthesize octree

7006 — Inverse quantize

7002 — synthesize surface approximation

7007

7003 — Reconstruct geometry

RAHT

7008 — Gnnerate LOD

7009 — Inverse lifring

7004 — Inverse transform coordinates

7010 — Inverse transform colors

position

attributes

# FIG. 8

8000 — Data input unit

8007

Position values of points       Attribute values of points

Set value, etc.

8001 — Quantization processor ← Metadata processor → Color transform processor — 8008

8002 — Voxelization processor ← → Attribute transform processor — 8009

8003 — Octree occupancy code generator ← → Prediction/lifting/RAHT transform processor — 8010

8004 — Surface model processor ← → Arithmetic coder — 8011

8005 — Intra/inter-coding processor ←

8006 — Arithmetic coder ←

Sharing reconstructed position values

8008 — Transmission processor

Transmission

# FIG. 9

# FIG. 10

## FIG. 11

Object data

Road data

## FIG. 12

## FIG. 13

## FIG. 14

Road LPU (Entire road)

Road PU1

Road PU2 (outside of the circle)

# FIG. 15

# FIG. 14

Group id =1

Group id =2

# FIG. 17

motion search window

motion search window

Azimuthal angle for
motion search window

sampling group 1

sampling group 2

# FIG. 18

motion search window

motion search window

Azimuthal angle for
motion search window

sampling group 1

sampling group 2

# FIG. 19

motion search window

motion search window

Azimuthal angle for
motion search window

sampling group 1

sampling group 2

# FIG. 20

Partitioned attribute source data

**Data input unit (geometry, attributes, parameters)**

**Coordinate transformer**

**Geometry information transform/ quantization processor**

**Spatial partitioner**

**Voxelization processor**

**Type of frame**

P-frame

I-frame

**Geometry information intra-predictor**

**Geometry information entropy encoder**

**Geometry information bitstream**

## Geometry information encoder

Subgroup reference type
subgroup_laserID
subgroup_azimuth
subgroup_radius
subgroup_offset
Subgroup range
Motion window type
Motion window_azimuth_range
Motion window_sub_laserID_range
Motion window_sub_azimuth_range
Motion window_Morton_level

**LPU splitter (Road/object splitting)**

Road LPU information→ (value)

**Motion predictor**

Motion application coordinate system→

Road PU split reference type
sensor_laserID
sensor_azimuth
sensor_radius

**PU splitter**

Road PU information→ (type,value)

**Motion compensation application part**

**Geometry information inter-predictor**

**Reference frame buffer**

**Reconstructed geometry information**

## Attribute information encoder

**Color transform processor**

**Lossy-Geom?**

Yes → **Recolorer**

No

**Attr intra-prediction?**

No → **Attribute information inter-predictor**

Yes

**Attribute information intra-predictor**

**Reconstructed attribute information**

**Attribute information entropy encoder**

**Attribute information bitstream**

EP 4 496 315 A1

**FIG. 21**

# FIG. 22

| SPS | GPS | APS0 | APS1 | TPS | Slice0 | | | | | | | | | | Attr1 | ... |
|---|---|---|---|---|---|---|---|---|---|---|---|---|---|---|---|---|
| | | | | | Geom0 | | | | | Attr0 | | | | | Attr1 | |
| | | | | | Geom slice header | Geom PU0 | | Geom PU1 | ... | Attr slice header | Attr PU0 | | Attr PU0 | ... | | |
| | | | | | | Geom PU Header | Geom PU data | | | | Attr PU header | Attr PU data | | | | |

# FIG. 23

| geometry_parameter_set_rbsp() { | Descriptor |
|---|---|
| gps_geom_parameter_set_id | ue(v) |
| gps_seq_parameter_set_id | ue(v) |
| geom_tree_type | u(2) |
| ... | |
| road_lpu_value | ue(v) |
| road_pu_type | u(2) |
| if (road_pu_type ==0) | |
| road_pu_laser_id | ue(v) |
| else if (road_pu_type ==1) | |
| road_pu_angle | ue(v) |
| else if (road_pu_type ==2) | |
| road_pu_radius | ue(v) |

# FIG. 24

| tile_parameter_set() { | Descriptor |
|---|---|
| num_tiles | ue(v) |
| for(i=0; i<num_tiles; i++) { | |
| tile_bounding_box_offset_x[i] | se(v) |
| tile_bounding_box_offset_y[i] | se(v) |
| ... | |
| road_lpu_value[i] | ue(v) |
| road_pu_type[i] | u(2) |
| if(road_pu_type[i] ==0) | |
| road_pu_laser_id[i] | ue(v) |
| else if (road_pu_type[i] ==1) | |
| road_pu_angle[i] | ue(v) |
| else if (road_pu_type[i] ==2) | |
| road_pu_radius[i] | ue(v) |
| ... | |
| } | |
| byte_alignment() | |
| } | |

# FIG. 25

| geometry_slice_header () { | Descriptor |
|---|---|
| gsh_geometry_parameter_set_id | ue(v) |
| gsh_tile_id | se(v) |
| gsh_slice_id | se(v) |
| ... | |
| road_lpu_value | ue(v) |
| road_pu_type | u(2) |
| if(road_pu_type ==0) | |
| road_pu_laser_id | ue(v) |
| else if (road_pu_type ==1) | |
| road_pu_angle | ue(v) |
| else if (road_pu_type ==2) | |
| road_pu_radius | ue(v) |
| ... | |
| } | |
| byte_alignment() | |
| } | |

# FIG. 26

| geom_pu_header() { | Descriptor |
|---|---|
| pu_tile_id | ue(v) |
| pu_slice_id | ue(v) |
| pu_cnt | u(16) |
| is_road_flag | u(1) |
| for (puldx =0; pultx < pu_cnt; puldx++) { | |
| pu_id[puldx] | ue(v) |
| pu_split_flag | u(1) |
| if (is_road_flag == flase) | |
| object_id | ue(v) |
| pu_has_motion_vector_flag | u(1) |
| if (pu_has_motion_vector_flag == 1) { | |
| pu_motion_coord_system_type | |
| if (motion_desc_type == 0) { | |
| for (k=0; k<4; k++) | ue(v) |
| for (l=0; l<4; l++) | |
| pu_motion_mat[pu_id][k][l] | |
| } else if (motion_desc_type == 1) { | ue(v) |
| for (k=0; k<3; k++) { | ue(v) |
| pu_motion_rot_vector[pu_id][k] | |
| pu_motion_trans[pu_id][k] | |
| } | u(1) |
| } else if (motion_desc_type == 2) { | ue(v) |
| pu_motion_rot_type[pu_id] | |
| pu_motion_rot[pu_id] | ue(v) |
| for (k=0; k<3; k++) | |
| pu_motion_trans[pu_id][k] | |
| } | |
| } | |
| } | |
| ... | |
| byte_alignment() | |
| } | |

# FIG. 27

| | |
|---|---|
| Encode point cloud data | ~S2700 |

| | |
|---|---|
| Transmit bitstream containing point cloud data | ~S2701 |

# FIG. 28

| | |
|---|---|
| Receive bitstream containing point cloud data | ~S2800 |

| | |
|---|---|
| Decode point cloud data | ~S2801 |

## INTERNATIONAL SEARCH REPORT

| International application No. |
|---|
| **PCT/KR2023/003710** |

| A. | CLASSIFICATION OF SUBJECT MATTER |
|---|---|

**H04N 19/57**(2014.01)i; **H04N 19/70**(2014.01)i; **H04N 19/54**(2014.01)i; **H04N 19/119**(2014.01)i; **H04N 19/597**(2014.01)i; **G01S 17/89**(2006.01)i

According to International Patent Classification (IPC) or to both national classification and IPC

| B. | FIELDS SEARCHED |
|---|---|

Minimum documentation searched (classification system followed by classification symbols)

H04N 19/57(2014.01); G01S 17/89(2006.01); G06T 7/11(2017.01); H04N 19/117(2014.01); H04N 19/136(2014.01); H04N 19/52(2014.01); H04N 19/597(2014.01); H04N 19/70(2014.01); H04N 19/85(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 포인트 클라우드(point cloud), 인코딩(encoding), 도로(road), 모션(motion), 예측(predict)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2021-0116336 A (LG ELECTRONICS INC.) 27 September 2021 (2021-09-27)<br>See paragraphs [0016]-[0030]; claims 1-8; and figure 1. | 1,8-9,15 |
| A | | 2-7,10-14 |
| A | KR 10-2020-0096726 A (BAIDU.COM TIMES TECHNOLOGY (BEIJING) CO., LTD. et al.) 13 August 2020 (2020-08-13)<br>See paragraphs [0140]-[0144]; and claims 1-5. | 1-15 |
| A | JP 2022-514548 A (TENCENT AMERICA LLC) 14 February 2022 (2022-02-14)<br>See claims 1-5. | 1-15 |
| A | KR 10-2021-0063841 A (FOUNDATION OF SOONGSIL UNIVERSITY-INDUSTRY COOPERATION) 02 June 2021 (2021-06-02)<br>See paragraphs [0026]-[0059]; and figure 1. | 1-15 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 June 2023** | **10 July 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/003710** |

**C. DOCUMENTS CONSIDERED TO BE RELEVANT**

| Category* | Citation of document, with indication, where appropriate, of the relevant passages | Relevant to claim No. |
| --- | --- | --- |
| A | JP 2022-502961 A (HUAWEI TECHNOLOGIES CO., LTD.) 11 January 2022 (2022-01-11)<br>See claims 1-8. | 1-15 |

Form PCT/ISA/210 (second sheet) (July 2022)

<table>
<tr><td colspan="3" align="center">**INTERNATIONAL SEARCH REPORT**<br>**Information on patent family members**</td><td colspan="2">International application No.<br><br>**PCT/KR2023/003710**</td></tr>
</table>

| Patent document cited in search report | | | Publication date (day/month/year) | Patent family member(s) | | | Publication date (day/month/year) |
|---|---|---|---|---|---|---|---|
| KR | 10-2021-0116336 | A | 27 September 2021 | CN | 115280780 | A | 01 November 2022 |
| | | | | EP | 4124041 | A1 | 25 January 2023 |
| | | | | KR | 10-2378138 | B1 | 25 March 2022 |
| | | | | US | 2021-0289211 | A1 | 16 September 2021 |
| | | | | WO | 2021-187839 | A1 | 23 September 2021 |
| KR | 10-2020-0096726 | A | 13 August 2020 | CN | 111771206 | A | 13 October 2020 |
| | | | | EP | 3710984 | A1 | 23 September 2020 |
| | | | | JP | 2021-516355 | A | 01 July 2021 |
| | | | | KR | 10-2334641 | B1 | 03 December 2021 |
| | | | | US | 2021-0350147 | A1 | 11 November 2021 |
| | | | | WO | 2020-154967 | A1 | 06 August 2020 |
| JP | 2022-514548 | A | 14 February 2022 | CN | 113519163 | A | 19 October 2021 |
| | | | | EP | 3854097 | A1 | 28 July 2021 |
| | | | | JP | 7112600 | B2 | 03 August 2022 |
| | | | | US | 2020-0280710 | A1 | 03 September 2020 |
| | | | | WO | 2020-180721 | A1 | 10 September 2020 |
| KR | 10-2021-0063841 | A | 02 June 2021 | KR | 10-2276044 | B1 | 12 July 2021 |
| JP | 2022-502961 | A | 11 January 2022 | CN | 112771850 | A | 07 May 2021 |
| | | | | EP | 3850832 | A1 | 21 July 2021 |
| | | | | JP | 7187688 | B2 | 12 December 2022 |
| | | | | KR | 10-2021-0069683 | A | 11 June 2021 |
| | | | | US | 2021-0217202 | A1 | 15 July 2021 |
| | | | | WO | 2020-072579 | A1 | 09 April 2020 |

Form PCT/ISA/210 (patent family annex) (July 2022)